# EUROPÄISCHE PATENTSCHRIFT

(11) **EP 2 246 129 B1**
(45) Veröffentlichungstag und Bekanntmachung des Hinweises auf die Patenterteilung: **14.03.2012**
(21) Anmeldenummer: 10172743.6
(22) Anmeldetag: 11.01.2006
(51) Int. Cl.: B08B 13/00

(54) **Reinigungsanlage**
Cleaning assembly
Installation de nettoyage

(30) Priorität: 22.01.2005 DE 102005003093
(43) Veröffentlichungstag der Anmeldung: 03.11.2010
(62) Teilanmeldung aus: 06706193.7
(73) Patentinhaber: Dürr Ecoclean GmbH, 70794 Filderstadt (DE)
(72) Erfinder: Leyendecker, Hansfried, 52156 Monschau (DE); Pauels, Robert, 52223 Stolberg (DE)
(74) Vertreter: Hoeger, Stellrecht & Partner Patentanwälte

(56) Entgegenhaltungen:
- EP-A- 0 110 525
- EP-A- 0 114 424
- US-A- 4 974 619
- US-A- 5 450 867
- PATENT ABSTRACTS OF JAPAN Bd. 2000, Nr. 1, 31. Januar 2000 (2000-01-31) & JP 11 277348 A (DENSO CORP), 12. Oktober 1999 (1999-10-12)
- PATENT ABSTRACTS OF JAPAN Bd. 2002, Nr. 4, 4. August 2002 (2002-08-04) & JP 2001 347236 A (ANELVA CORP), 18. Dezember 2001 (2001-12-18)

## Beschreibung

Die vorliegende Erfindung betrifft eine Reinigungsanlage zum Reinigen von Werkstücken, welche mindestens eine Reinigungsstation umfasst, in welcher die Werkstücke einem Reinigungsvorgang unterzogen werden.

Solche Reinigungsanlagen sind aus dem Stand der Technik bekannt.

Insbesondere sind Mehr-Kammer- oder Mehr-Stationen-Reinigungsanlagen bekannt, bei denen der interne Werkstücktransport von Station zu Station mit Fördervorrichtungen wie beispielsweise Hubbalkenförderern, Überhebeeinrichtungen oder Rollenbahnen durchgeführt wird.

Bei den bislang für den anlageninternen Werkstücktransport eingesetzten Fördervorrichtungen ist das Werkstück in seiner Orientierung unveränderlich. Allenfalls wird das Werkstück innerhalb einer Reinigungsstation um eine horizontale oder vertikale Drehachse gedreht. Im Falle der Verwendung von Hubbalkenförderern ist auch die Verweilzeit des Werkstücks in einer Reinigungsstation unveränderlich und in allen Reinigungsstationen gleich lang. Bei jeder Änderung des zu reinigenden Werkstücks und bei jeder Änderung des Reinigungsprozesses muss die Reinigungsanlage umgebaut werden.

Die EP-0 110 525 offenbart eine Reinigungsanlage gemäß dem Oberbegriff von Anspruch 1.

Der vorliegenden Erfindung liegt die Aufgabe zugrunde, eine Reinigungsanlage der eingangs genannten Art zu schaffen, welche eine flexible Gestaltung eines Entgratungsvorgangs erlaubt.

Diese Aufgabe wird erfindungsgemäß durch eine Reinigungsanlage nach Anspruch 1 gelöst.

Die erfindungsgemäße Lösung ermöglicht es, allein durch Änderung des Bewegungsablaufs der Handhabungsvorrichtung den Behandlungsvorgang in dem Behandlungsbereich der Reinigungsstation zu verändern und insbesondere bei einer Änderung des Werkstücks an die geänderte Werkstückgeometrie anzupassen, ohne dass hierfür ein Umbau der Reinigungsanlage erforderlich ist.

Außerdem ermöglicht es die Verwendung einer Handhabungsvorrichtung zum Bewegen des Werkstücks, einzelne Bohrungen und andere kritische Stellen des Werkstücks durch geeignete Steuerung der Handhabungsvorrichtung der Behandlung durch eine einfach aufgebaute Behandlungsvorrichtung mit stationär angeordneten Behandlungsmitteln zu unterwerfen, ohne dass in der Behandlungsvorrichtung bewegliche Teile, wie beispielsweise bewegliche Spritzlanzen, verwendet werden müssen.

Die erfindungsgemäße Reinigungsanlage ist daher in ihrer mechanischen Konstruktion, unabhängig vom Typ der zu reinigenden Werkstücke, weitgehend standardisierbar.

Vorzugsweise ist die Handhabungsvorrichtung mit einer programmierbaren Steuerung versehen, so dass eine Veränderung des Bewegungsablaufs der Handhabungsvorrichtung allein durch Softwareänderungen realisierbar ist. Dadurch kann die Reinigungsanlage allein durch Softwareänderungen an Werkstücke mit veränderter Geometrie angepasst werden; allenfalls eine Anpassung einer Greifvorrichtung der Handhabungsvorrichtung an die veränderte Geometrie eines Werkstücks kann weiterhin erforderlich sein.

Die Handhabungsvorrichtung der erfindungsgemäßen Reinigungsanlage kann das Werkstück vor der Behandlung von einem Werkstückeingang der Reinigungsanlage oder aber von einer stromaufwärts von der Handhabungsvorrichtung angeordneten anderen Handhabungsvorrichtung oder von einer zwei aufeinanderfolgenden Handhabungsvorrichtungen zwischengeschalteten Werkstückablage oder Werkstückbewegungsvorrichtung übernehmen.

Ferner kann die Handhabungsvorrichtung das Werkstück nach der Behandlung an einen Werkstückausgang der Reinigungsanlage, an eine stromabwärts von der Handhabungsvorrichtung angeordnete weitere Handhabungsvorrichtung oder an eine zwei aufeinanderfolgenden Handhabungsvorrichtungen zwischengeschaltete Werkstückablage oder Werkstückbewegungsvorrichtung übergeben.

Unter einem "Reinigungsvorgang" ist in dieser Beschreibung und in den beigefügten Ansprüchen außer einem Vorgang, welcher der Befreiung des Werkstücks von Fremdkörpern und/oder anhaftenden Flüssigkeiten dient, auch ein solcher Vorgang zu verstehen, welcher üblicherweise im Zuge einer Werkstückreinigungsbehandlung durchgeführt wird, insbesondere ein Trocknungsvorgang oder ein Werkstück-Entgratungsvorgang.

Bei einer bevorzugten Ausgestaltung der erfindungsgemäßen Reinigungsanlage ist vorgesehen, dass der Bewegungsablauf der Handhabungsvorrichtung in Abhängigkeit von dem Typ des jeweils gehandhabten Werkstücks werkstücktypspezifisch steuerbar ist. Dies erlaubt es nicht nur, die Reinigungsanlage in einfacher Weise von einem Werkstücktyp auf einen anderen Werkstücktyp umzustellen, sondern ermöglicht es auch, in gemischter Abfolge aufeinanderfolgende Werkstücke unterschiedlicher Werkstücktypen in derselben Reinigungsanlage zu behandeln.

Um das Werkstück mittels der Handhabungsvorrichtung in dem Behandlungsbereich möglichst frei relativ zu der jeweiligen Behandlungsvorrichtung bewegen zu können, und zwar sowohl durch Translationsbewegungen als auch durch Drehbewegungen, ist es günstig, wenn die Handhabungsvorrichtung mindestens drei, vorzugsweise mindestens vier, Bewegungsfreiheitsgrade aufweist.

Unter einer "Drehbewegung" ist dabei in dieser Beschreibung und in den beigefügten Ansprüchen jede Bewegung um eine ortsfeste oder auch bewegliche Drehachse zu verstehen, welche um beliebige Winkel und mit oder ohne Wechsel der Drehrichtung ausgeführt werden kann.

Die Handhabungsvorrichtung umfasst vorzugsweise eine Greifvorrichtung zum Ergreifen des Werkstücks.

Bei einer bevorzugten Ausgestaltung der erfindungsgemäßen Reinigungsanlage ist vorgesehen, dass die Handhabungsvorrichtung als ein Roboter ausgebildet ist.

Die erfindungsgemäße Reinigungsanlage kann mehrere Reinigungsstationen umfassen, wobei jede Reinigungsstation jeweils mindestens einer Handhabungsvorrichtung zugeordnet ist, welche ein Werkstück vor der Behandlung in dem Behandlungsbereich der Reinigungsstation übernimmt, das Werkstück der Behandlung in dem Behandlungsbereich der Reinigungsstation zuführt und das Werkstück nach der Behandlung in dem Behandlungsbereich der Reinigungsstation übergibt.

Die mindestens eine Handhabungsvorrichtung der Reinigungsanlage kann an einer Reinigungsstation der Reinigungsanlage stationär angeordnet sein.

Alternativ hierzu ist es auch möglich, dass die Reinigungsanlage eine Handhabungsvorrichtung umfasst, welche innerhalb der Reinigungsanlage zwischen verschiedenen Reinigungsstationen beweglich ist.

Beispielsweise könnte vorgesehen sein, dass ein oder mehrere Roboter an einer Bodenschiene oder an einer Deckenschiene in einer Längsrichtung der Reinigungsanlage verfahrbar angeordnet sind.

Die erfindungsgemäße Reinigungsanlage kann insbesondere mindestens eine Waschstation umfassen, welche einen Waschbehälter umfasst, in welchem sich das Werkstück während eines Waschvorgangs befindet, wobei der Waschbehälter eine Zugangsöffnung aufweist, durch welche sich die Handhabungsvorrichtung während des Waschvorgangs in den Waschbehälter hinein erstreckt.

Diese Zugangsöffnung kann insbesondere an der Oberseite des Waschbehälters angeordnet sein.

Ferner kann vorgesehen sein, dass die Reinigungsanlage mindestens eine Vakuumstation umfasst, welche einen Vakuumbehälter umfasst, in welchem sich das Werkstück während eines Arbeitsvorgangs unter Vakuum befindet, wobei der Vakuumbehälter eine Eintrittsöffnung aufweist, welche während des Arbeitsvorgangs mittel eines an der Handhabungsvorrichtung angeordneten Deckels verschlossen wird.

Die Reinigungsanlage umfasst eine Entgratungsstation, welche mindestens eine Spritzlanze umfasst, wobei das Werkstück mittels der Handhabungsvorrichtung im Behandlungsbereich der Entgratungsstation so bewegt wird, dass eine Spritzöffnung der Spritzlanze während des Spritzvorgangs in einen Hohlraum des Werkstücks eintritt.

Ferner kann vorgesehen sein, dass mindestens eine Reinigungsstation der Reinigungsanlage in einer Kammer mit einer Kammerwand angeordnet ist und dass die Reinigungsanlage eine Werkstückbewegungsvorrichtung, insbesondere ein Drehschott, umfasst, mittels welcher das Werkstück von der einen Seite der Kammerwand zu der anderen Seite der Kammerwand durch eine Durchgangsöffnung in der Kammerwand hindurch bewegbar ist.

Die Werkstückbewegungsvorrichtung kann insbesondere einen Drehteller umfassen.

Vorzugsweise ist vorgesehen, dass das Werkstück während der Behandlung in dem Behandlungsbereich der Reinigungsstation an der Handhabungsvorrichtung gehalten ist.

Besonders günstig ist es, wenn das Werkstück während der Behandlung in dem Behandlungsbereich der Reinigungsstation mittels der Handhabungsvorrichtung relativ zu einer Behandlungsvorrichtung der Reinigungsstation bewegbar, insbesondere drehbar und/oder schwenkbar, ist.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische Draufsicht von oben auf eine Reinigungsanlage mit vier aufeinanderfolgenden Reinigungsstationen (Vorreinigen, Hochdruck-Entgraten, Injektionsflutwaschen und Vakuumtrock- nen), denen jeweils eine Handhabungsvorrichtung in Form eines Roboters zugeordnet ist;
- Fig. 2: einen schematischen Längsschnitt durch die Reinigungsanlage aus Fig. 1, längs der Linie 2 - 2 in Fig. 1;
- Fig. 3: einen schematischen Querschnitt durch die Reinigungsanlage aus Fig. 1, längs der Linie 3 - 3 in Fig. 1;
- Fig. 4: eine schematische perspektivische Darstellung der Reinigungs- anlage mit entfernter Deckenwand, von der Rückseite her gese- hen;
- Fig. 5: eine schematische perspektivische Darstellung der Reinigungs- anlage mit entfernter Rückwand, von der Rückseite her gesehen;
- Fig. 6: eine schematische perspektivische Darstellung der Reinigungs- anlage mit entfernten Seitenwänden und entfernter Deckenwand, von der Ausgangsseite der Reinigungsanlage aus gesehen;
- Fig. 7: eine schematische perspektivische Darstellung der Reinigungs- anlage mit entfernten Seitenwänden und entfernter Deckenwand, von der Vorderseite der Reinigungsanlage aus gesehen;
- Fig. 8: eine schematische perspektivische Darstellung der Reinigungs- anlage mit entfernten Seitenwänden und entfernter Deckenwand, von der Eingangsseite der Reinigungsanlage aus gesehen;
- Fig. 9: eine schematische perspektivische Darstellung einer Vorreini- gungsstation der Reinigungsanlage mit einem Vorreinigungsbe- hälter, einem Roboter und einem vorzureinigenden Werkstück;
- Fig. 10: eine der Figur 9 entsprechende Darstellung der Vorreinigungssta- tion, wobei sich eine Greifvorrichtung des Roboters auf das Werk- stück zu bewegt;
- Fig. 11: eine schematische perspektivische Darstellung des Werkstücks und der Greifvorrichtung des Roboters, vor dem Ergreifen des Werkstücks durch die Greifvorrichtung;
- Fig. 12: eine der Figur 11 entsprechende schematische perspektivische Darstellung, nach dem Ergreifen des Werkstücks durch die Greif- vorrichtung des Roboters und nach dem Abheben des Werkstücks von einer Werkstückhalterung;
- Fig. 13: eine schematische perspektivische Darstellung des Vorreinigungs- behälters der Vorreinigungsstation mit an der Innenwand des Vorreinigungsbehälters angeordneten Spritzdüsen;
- Fig. 14: eine schematische perspektivische Darstellung der Vorreinigungs- station, wobei das von der Greifvorrichtung gehaltene Werkstück gerade von oben in den Vorreinigungsbehälter eingeführt wird;
- Fig. 15: eine schematische perspektivische Darstellung der Vorreinigungs- station während eines Vorreinigungsvorgangs, wobei das Werk- stück durch die Spritzdüsen mit Strahlen einer Vorreinigungsflüs- sigkeit beaufschlagt wird und dabei von dem Roboter relativ zu den Spritzdüsen bewegt wird;
- Fig. 16: eine schematische perspektivische Darstellung einer Trennwand zwischen zwei Reinigungsstationen der Reinigungsanlage mit einem Drehschott und einer am Drehschott angeordneten leeren Werkstückhalterung;
- Fig. 17: eine schematische perspektivische Darstellung des Drehschotts aus Fig. 16, wobei gerade ein Werkstück mittels eines Roboters auf die Werkstückhalterung aufgesetzt wird;
- Fig. 18: eine schematische perspektivische Darstellung des Drehschotts mit einem auf die Werkstückhalterung aufgesetzten Werkstück;
- Fig. 19: eine schematische perspektivische Darstellung des Drehschotts, während das Drehschott um eine vertikale Achse gedreht wird;
- Fig. 20: eine schematische perspektivische Darstellung einer Entgratungs- vorrichtung der Reinigungsanlage mit einer in radialer Richtung sprühenden Sprühlanze und einem Roboterarm, welcher ein zu entgratendes Werkstück hält;
- Fig. 21: eine der Fig. 20 entsprechende schematische perspektivische Darstellung, nachdem das Werkstück mittels des Roboters so re- lativ zu der Sprühlanze bewegt worden ist, dass sich die Aus- trittsöffnungen der Sprühlanze innerhalb eines Hohlraums des Werkstücks befinden;
- Fig. 22: eine der Fig. 20 entsprechende schematische perspektivische Darstellung, welche zeigt, wie das Werkstück mittels einer weite- ren, in axialer Richtung sprühenden Sprühlanze entgratet wird;
- Fig. 23: eine schematische perspektivische Darstellung einer Injektions- flutwaschstation und einer Vakuumtrocknungsstation der Reini- gungsanlage, mit entfernten Seitenwänden;
- Fig. 24: eine schematische perspektivische Darstellung eines Injektions- flutwaschbehälters der Injektionsflutwaschstation;
- Fig. 25: eine schematische perspektivische Darstellung des Injektionsflut- waschbehälters, wobei ein zu waschendes Werkstück gerade mittels eines Roboters von oben in den Injektionsflutwaschbehäl- ter eingebracht wird;
- Fig. 26: eine schematische perspektivische Darstellung des Injektionsflut- waschbehälters während eines Injektionsflutwaschvorgangs, bei welchem das Werkstück mit Reinigungsflüssigkeitsstrahlen beauf- schlagt und dabei mittels des Roboters relativ zu den Flutwasch- düsen bewegt wird;
- Fig. 27: eine schematische perspektivische Darstellung eines Vakuumbe- hälters der Vakuumtrocknungsstation der Reinigungsanlage;
- Fig. 28: eine schematische perspektivische Darstellung des Vakuumbe- hälters und eines Roboterarms mit einem Deckel für den Va- kuumbehälter, wobei ein vakuumzutrocknendes Werkstück gerade mittels des Roboters von oben in den Vakuumbehälter eingebracht wird; und
- Fig. 29: eine der Fig. 28 entsprechende schematische perspektivische Darstellung, nachdem das Werkstück in den Vakuumbehälter ein- gebracht und der Vakuumbehälter mittels des an dem Roboter- arm angeordneten Deckels verschlossen worden ist.

Gleiche oder funktional äquivalente Elemente sind in allen Figuren mit denselben Bezugszeichen bezeichnet.

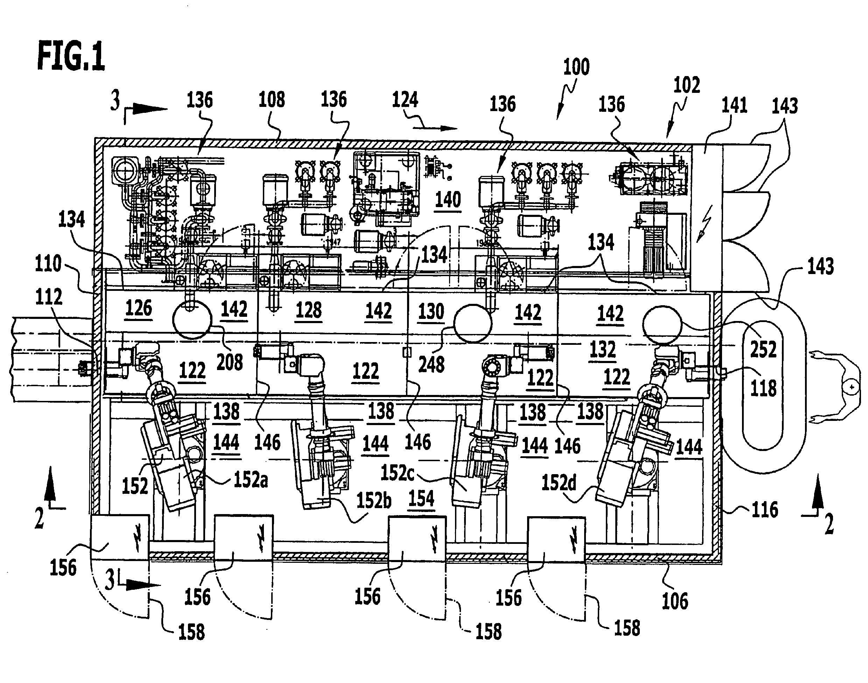

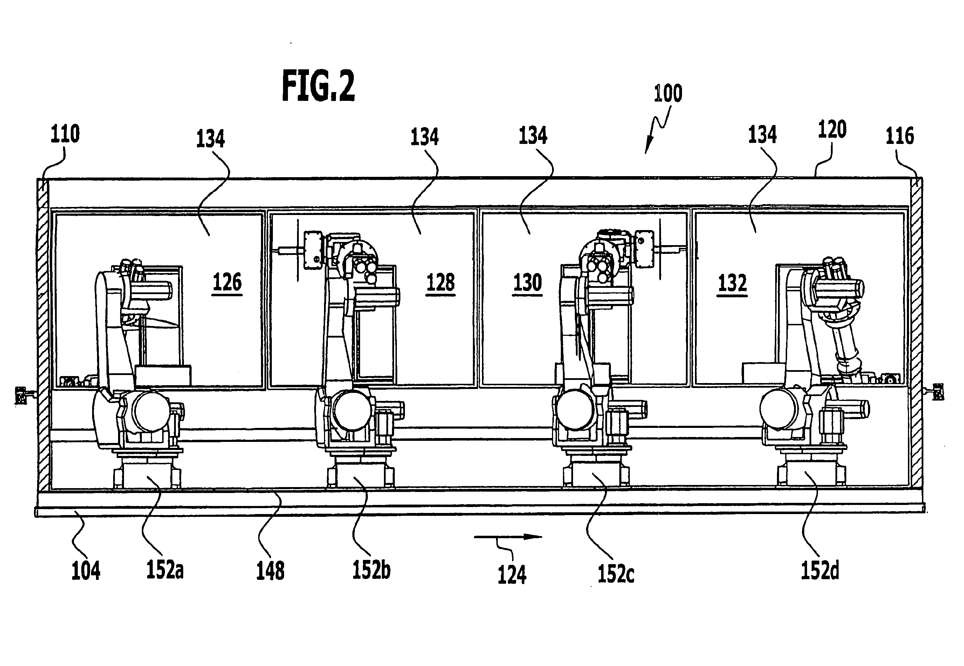

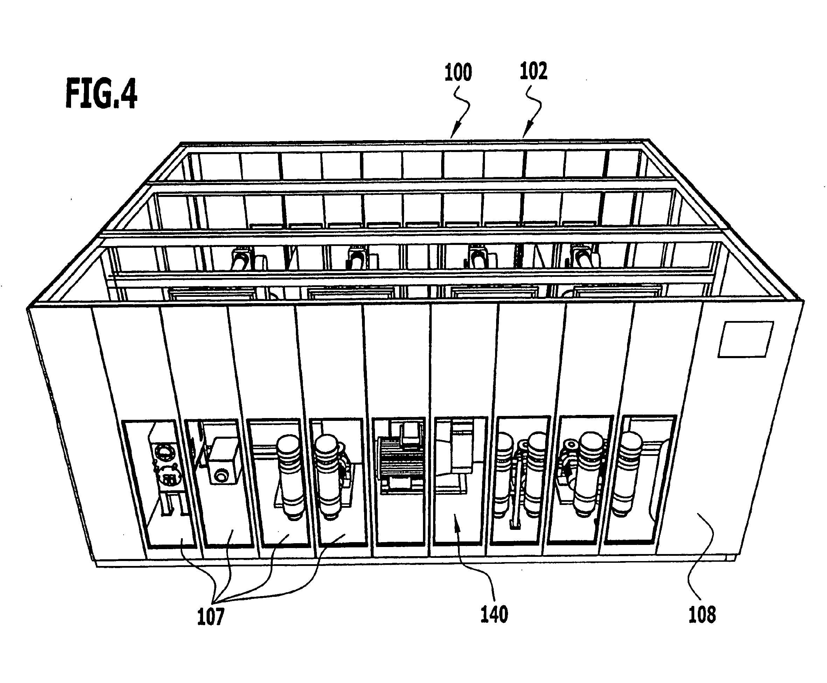

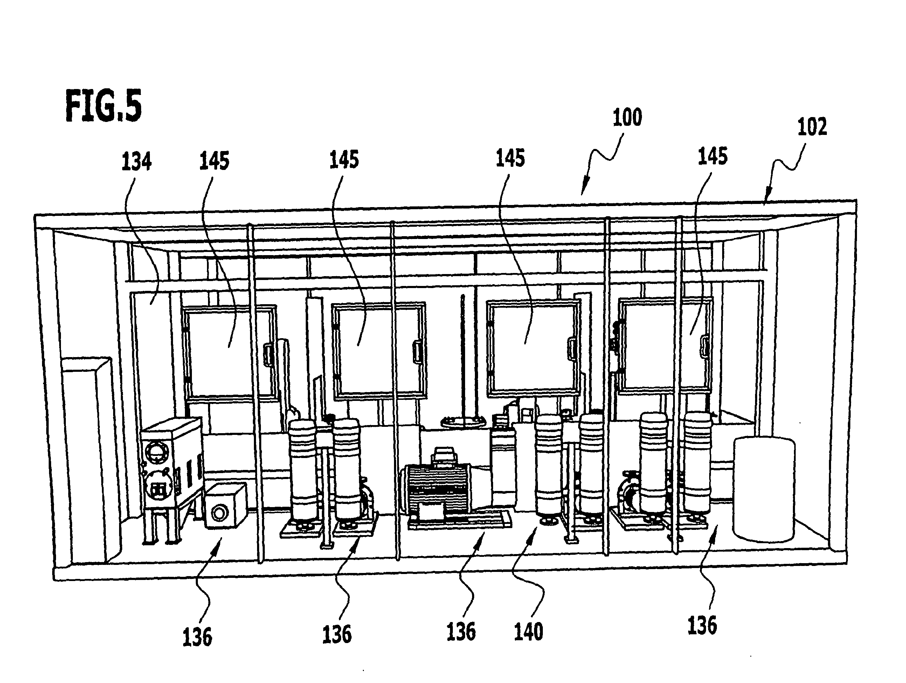

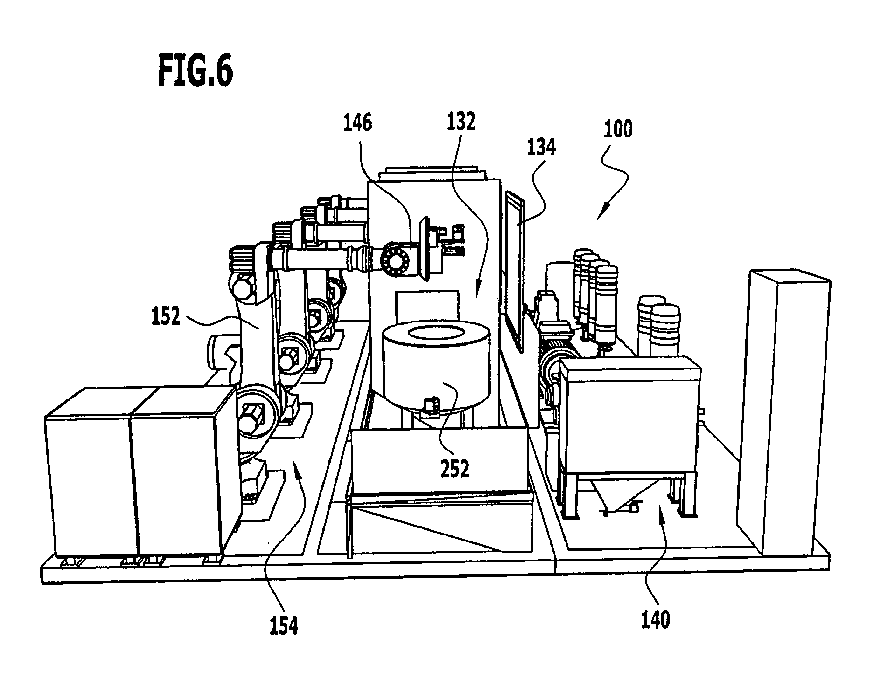

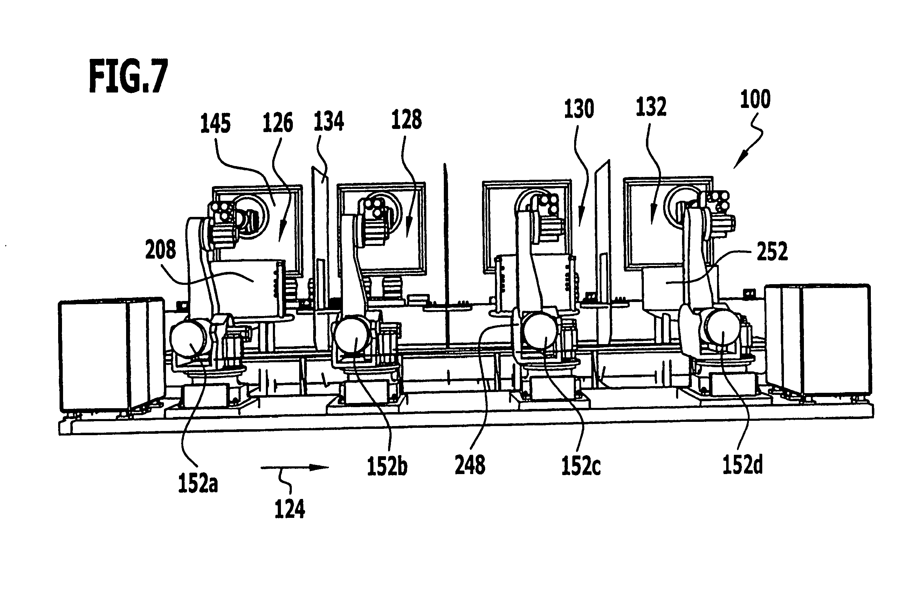

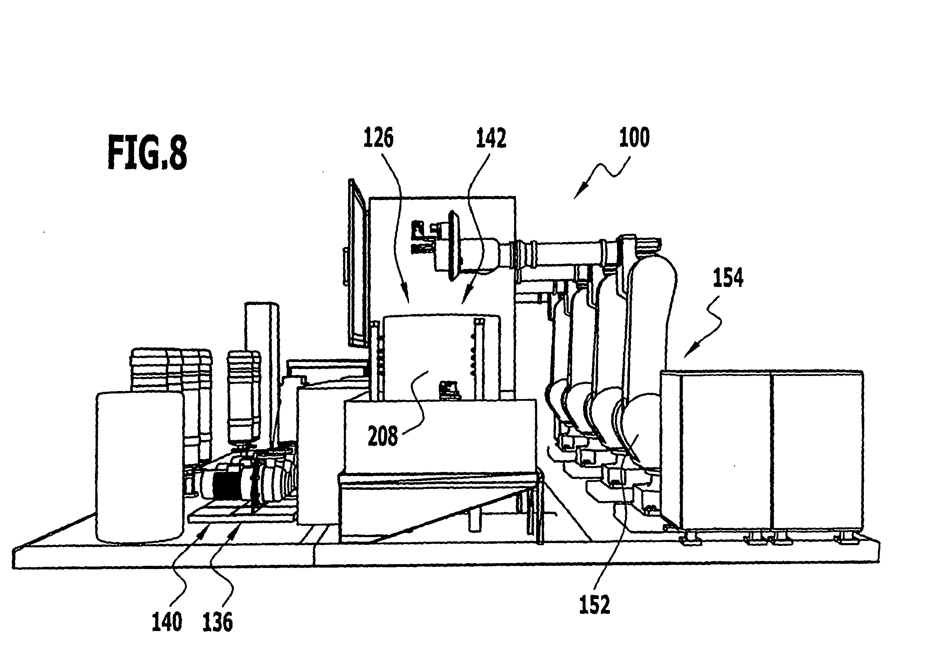

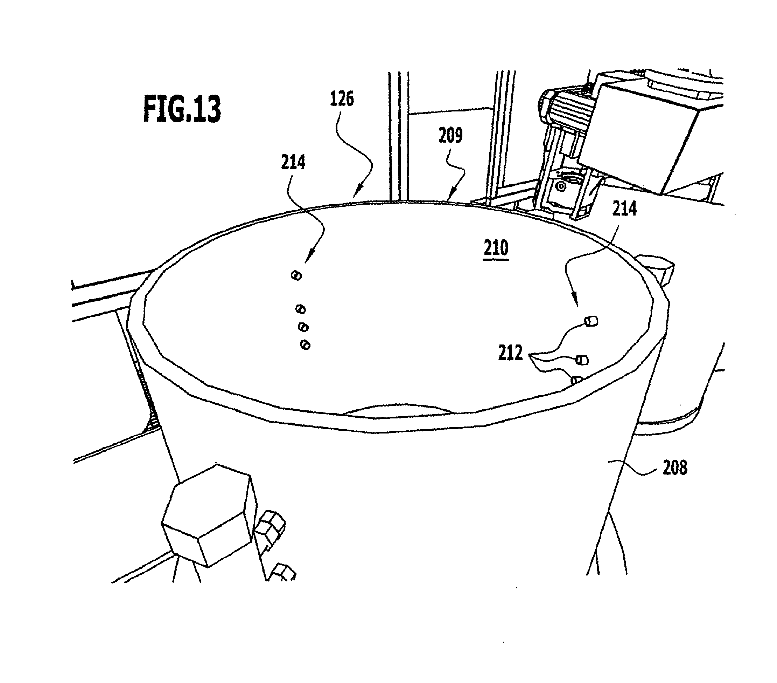

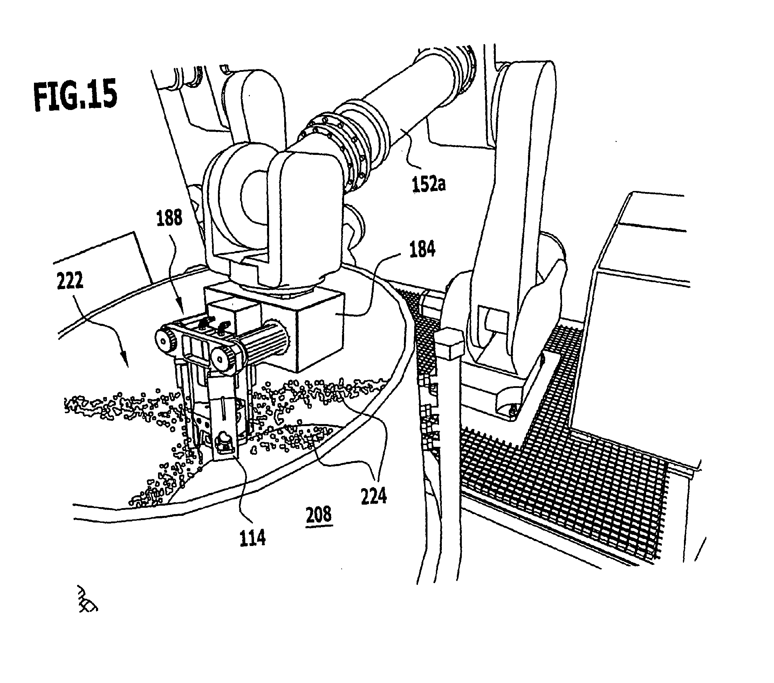

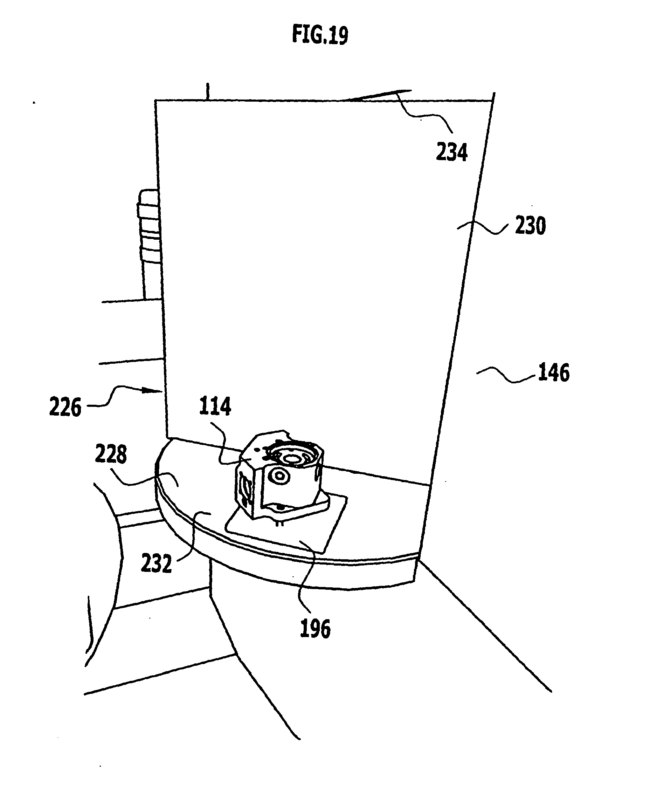

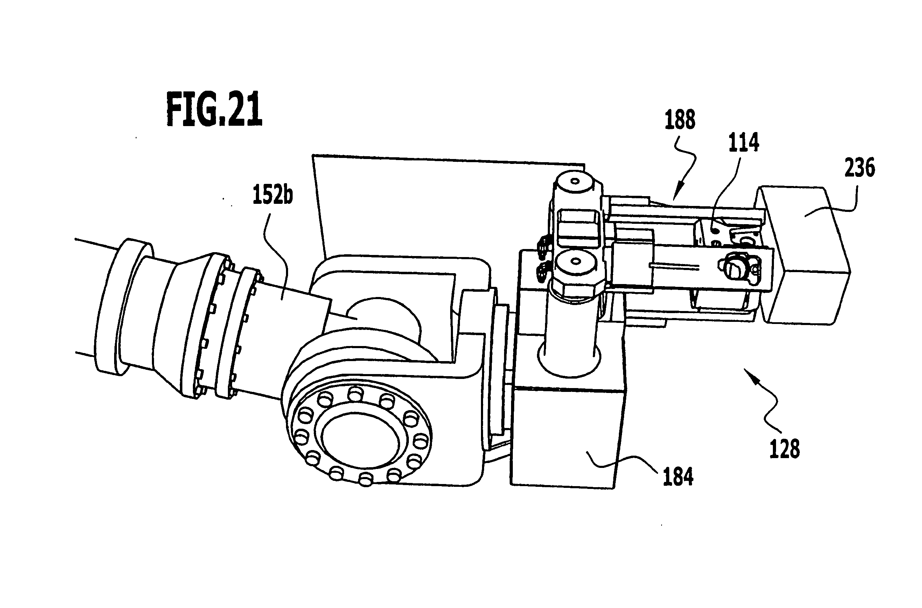

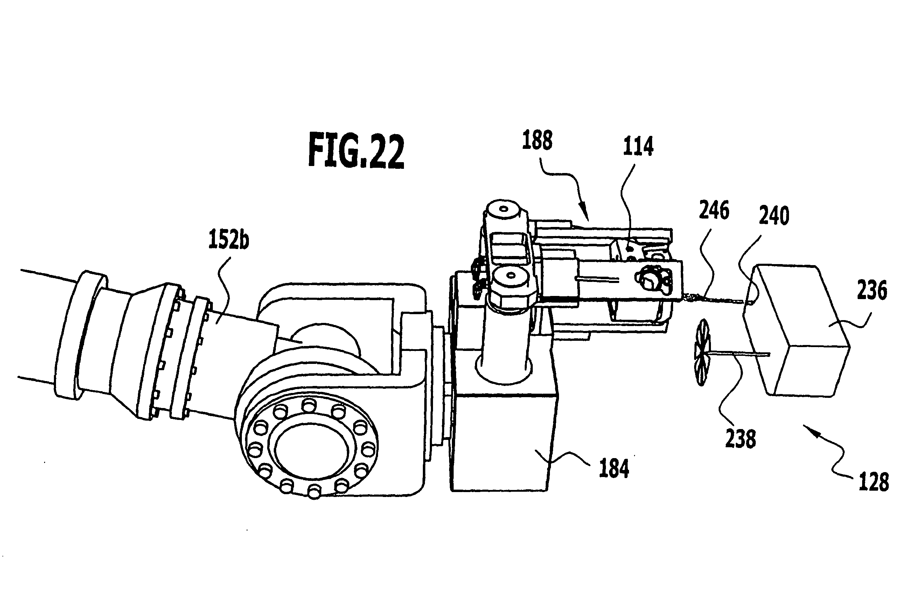

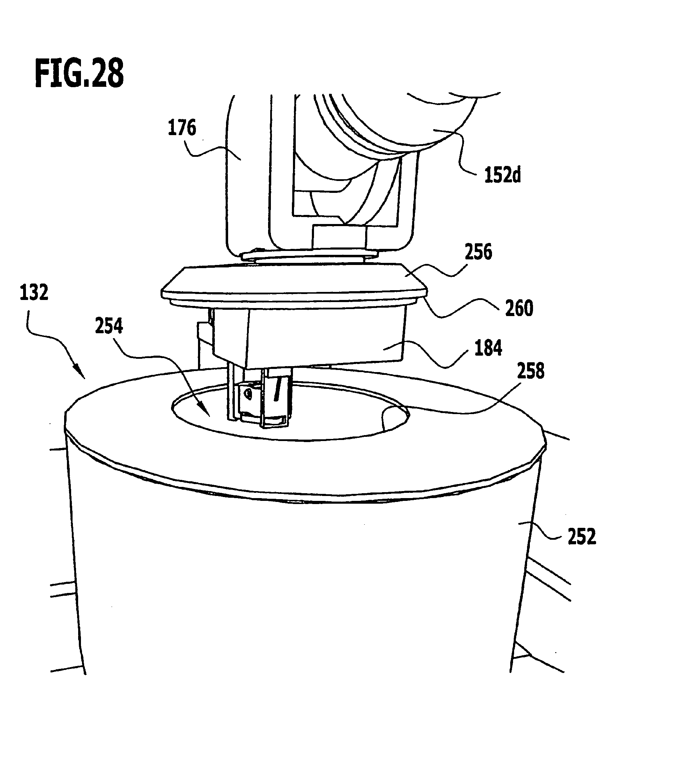

Eine in den Fig. 1 bis 29 dargestellte, als Ganzes mit 100 bezeichnete Reinigungsanlage umfasst ein im wesentlichen quaderförmiges Gehäuse 102 mit einer Bodenwand 104, einer vorderen Seitenwand 106, einer mit Fenstern 107 versehenen hinteren Seitenwand 108, einer linken, eingangsseitigen Seitenwand 110 mit einer Beschickungsöffnung 112 zum Einbringen eines zu reinigenden Werkstücks 114 in die Reinigungsanlage 100, einer rechten, ausgangsseitigen Seitenwand 116 mit einer Entnahmeöffnung 118 zum Abgeben eines in der Reinigungsanlage 100 gereinigten Werkstücks und mit einer Deckenwand 120.

Die Reinigungsanlage 100 umfasst mehrere, im vorliegenden Ausführungsbeispiel vier, Reinigungsstationen 122, welche in der Längsrichtung 124 der Reinigungsanlage 100 zwischen deren eingangsseitiger Seitenwand 110 und deren ausgangsseitiger Seitenwand 116 aufeinanderfolgen.

Die konkret dargestellte Ausführungsform einer Reinigungsanlage 100 umfasst, vom Eingang zum Ausgang der Reinigungsanlage 100 aufeinanderfolgend, eine Vorreinigungsstation 126, eine Hochdruck-Entgratungsstation 128, eine Injektionsflutwaschstation 130 und eine Vakuumtrocknungsstation 132.

Jede der Reinigungsstationen 122 ist durch jeweils eine parallel zur Längsrichtung 124 der Reinigungsanlage 100 verlaufende vertikale Trennwand 134 in einen zwischen der Trennwand 134 und der hinteren Seitenwand 108 des Gehäuses 102 liegenden Wartungsbereich 136 und einen zwischen der Trennwand 134 und der vorderen Seitenwand 106 des Gehäuses 102 liegenden Arbeitsbereich 138 unterteilt.

In dem Wartungsbereich 136 jeder Reinigungsstation 122 sind die für die Durchführung der Behandlung der Werkstücke 114 im Arbeitsbereich 138 erforderlichen Versorgungs- und Aufbereitungseinrichtungen angeordnet, wie beispielsweise Reinigungsmitteltanks, Pumpen, Filtriergeräte, Reinigungsmittelaufbereitungsanlagen, Vakuumpumpen oder ähnliches.

Die Wartungsbereiche 136 aller Reinigungsstationen 122 bilden zusammen einen durchgehend begehbaren Wartungsraum 140, welcher sich parallel zu den Trennwänden 134 in der Längsrichtung 124 der Reinigungsanlage 100 erstreckt und über eine (nicht dargestellte) Zugangstür vom Außenraum der Reinigungsanlage 100 aus für eine Wartungsperson zugänglich ist, so dass die erforderlichen Wartungsarbeiten im Wartungsraum 140 durchgeführt werden können, ohne dass hierfür die Behandlung der Werkstücke 114 in den Arbeitsbereichen 138 der Reinigungsanlage 100 unterbrochen werden muss.

Ferner ist an einem Ende des Wartungsraums 140 ein Schaltschrank 141, welcher Steuergeräte und/oder Energieversorgungsgeräte für die in den Wartungsbereichen 136 angeordneten Versorgungs- und Aufbereitungseinrichtungen enthält, so in die Seitenwand 116 des Gehäuses 102 eingepasst, dass Türen 143 des Schaltschranks 141 vom Außenraum der Reinigungsanlage 100 aus geöffnet werden können, um Zugang zum Innenraum des Schaltschranks 141 zu erhalten.

Der Arbeitsbereich 138 jeder Reinigungsstation 122 umfasst einen unmittelbar an die Trennwand 134 angrenzenden Behandlungsbereich 142 und einen sich zwischen dem Behandlungsbereich 142 und der vorderen Seitenwand 106 erstreckenden Roboter-Standbereich 144.

Im Behandlungsbereich 142 jeder Reinigungsstation 122 welcher die für die jeweilige Reinigungsstation 122 spezifischen Behandlungsschritte an den Werkstücken 114 ausgeführt. Der Aufbau der Behandlungsbereiche 142 der Reinigungsstation 122 wird im folgenden, im Rahmen der Beschreibung der Funktionsweise der Reinigungsanlage 100, noch näher erläutert werden.

In jeder Trennwand 134 ist ein schwenkbares Zugangsfenster 145 vorgesehen, durch welches der jeweilige Behandlungsbereich 142 vom jeweils zugeordneten Wartungsbereich 136 aus zugänglich ist, um Wartungs-, Reinigungs-und/oder Reparaturarbeiten im Behandlungsbereich 142 vom Wartungsbereich 136 aus durchführen zu können.

Die Behandlungsbereiche 142 von in der Längsrichtung 124 aufeinanderfolgenden Reinigungsstationen 122 sind durch jeweils eine senkrecht zur Längsrichtung 124 verlaufende, vertikale seitliche Trennwand 146 voneinander getrennt.

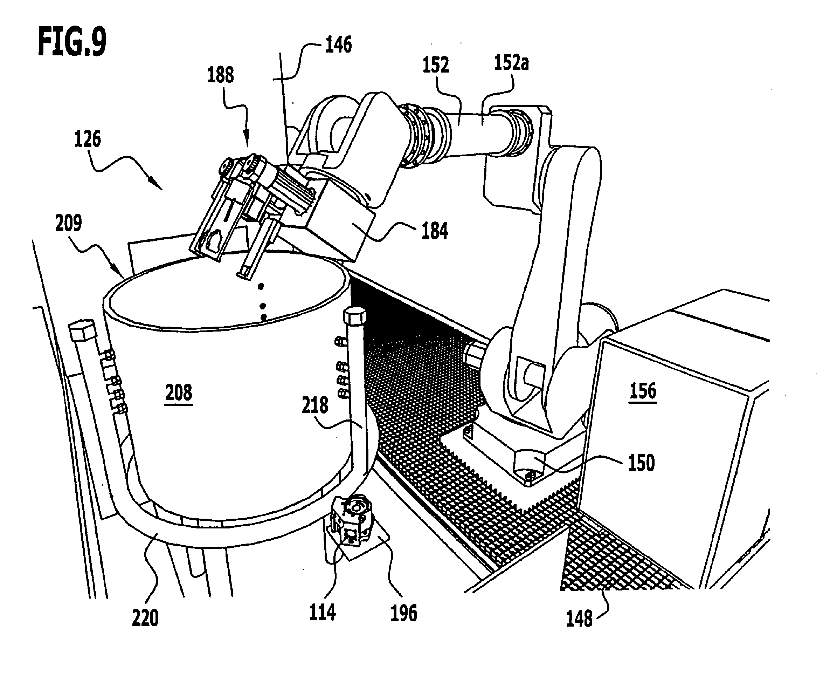

Der Roboter-Standbereich 144 jeder Reinigungsstation 122 weist einen durch einen Gitterrost 148 gebildeten Boden auf (siehe Fig. 9), welcher jeweils einen Sockel 150 eines als Handhabungsvorrichtung dienenden Roboters 152 trägt.

Die Roboter-Standbereiche 144 aller Reinigungsstationen 122 sind nicht durch Trennwände voneinander getrennt, sondern bilden zusammen einen durchgehend begehbaren Roboter-Standraum 154 der Reinigungsanlage 100.

Der Roboter-Standraum 154 ist über eine (nicht dargestellte) Zugangstür vom Außenraum der Reinigungsanlage 100 aus für eine Wartungsperson zugänglich.

Neben dem Sockel 150 jeden Roboters 152 ist ein Roboterschaltschrank 156 angeordnet, welcher so in die vordere Seitenwand 106 des Gehäuses 102 der Reinigungsanlage 100 eingesetzt ist, dass eine Vordertür 158 des Roboterschaltschranks 156 vom Außenraum der Reinigungsanlage 100 aus geöffnet werden kann, um Zugang zu dem Roboterschaltschrank 156 zu erhalten und an demselben erforderlich werdende Programmierungs-, Wartungs- und/oder Reparaturarbeiten durchzuführen.

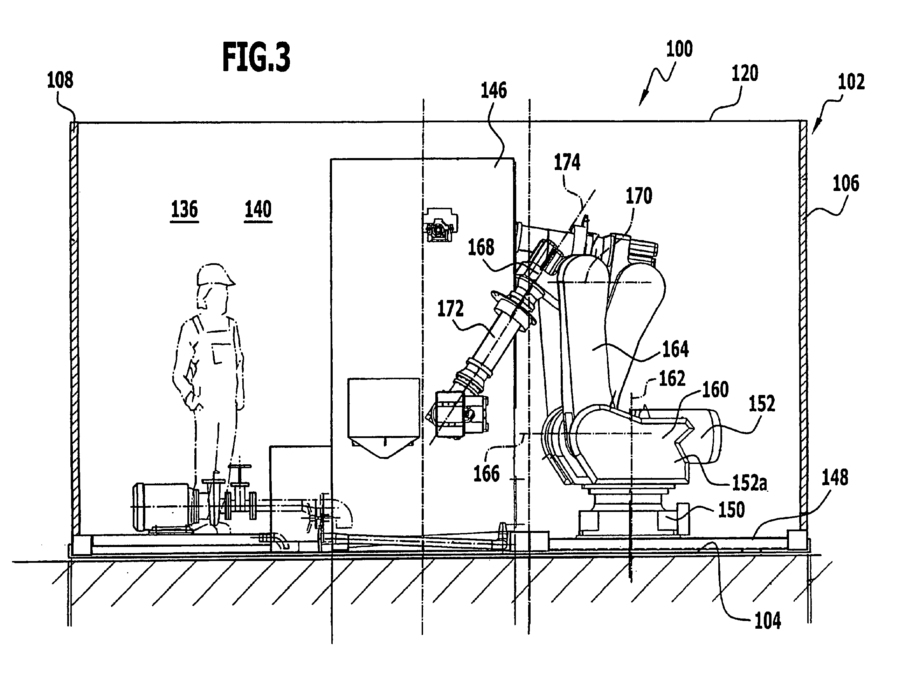

Wie beispielsweise aus Fig. 3 zu ersehen ist, weist jeder der Roboter 152 jeweils mindestens sechs Drehachsen auf, um welche Teile des Roboters 152 mittels geeigneter Dreh- oder Schwenkantriebe relativ zueinander, von einer (nicht dargestellten) Steuerung des Roboters 152 gesteuert, beweglich sind.

So ist ein Basisteil 160 jeden Roboters um eine vertikale erste Drehachse 162 relativ zu dem Sockel 150 verdrehbar an dem Sockel 150 angeordnet (siehe Fig. 3).

Ein Hauptarm 164 des Roboters 152 ist um eine horizontale zweite Drehachse 166 relativ zu dem Basisteil 160 verschwenkbar an demselben gehalten.

Ein winkelförmiges Halteteil 168 ist um eine horizontale dritte Drehachse 170 relativ zu dem Hauptarm 164 schwenkbar an demselben angeordnet.

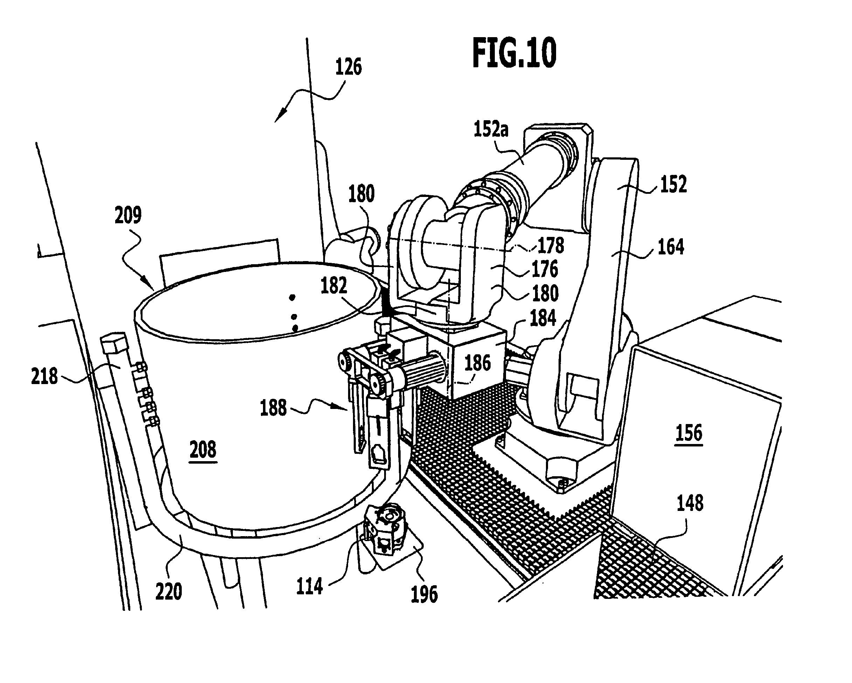

Das Halteteil 168 bildet ein Lager für einen Dreharm 172, der um seine Längsachse, die vierte Drehachse 174, relativ zu dem Halteteil 168 drehbar angeordnet ist (siehe Fig. 10).

Das dem Halteteil 168 abgewandte freie Ende des Dreharms 172 trägt ein im wesentlichen U-förmiges Bügelteil 176, das um eine im wesentlichen senkrecht zur vierten Drehachse 174 verlaufende fünfte Drehachse 178 relativ zu dem Dreharm 172 schwenkbar angeordnet ist.

Der die beiden zueinander parallelen Schenkel 180 des U-förmigen Bügelteils 176 miteinander verbindende Steg 182 trägt an seiner der fünften Drehachse 178 abgewandten Außenseite einen Roboterkopf 184, der um eine radial zur fünften Drehachse 178 verlaufende sechste Drehachse 186 relativ zu dem Bügelteil 176 drehbar an demselben angeordnet ist.

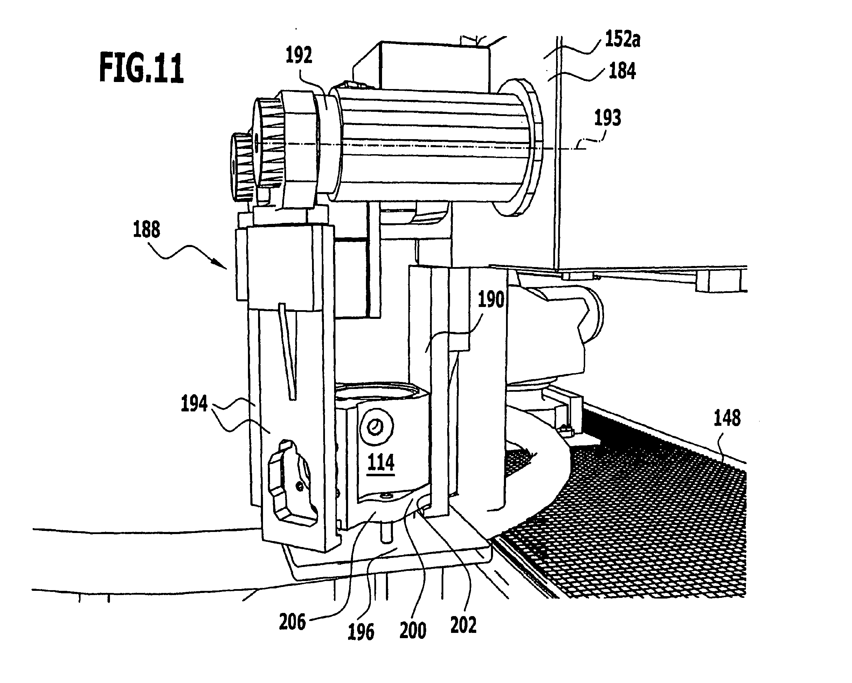

An einer Seitenfläche 188 des im wesentlichen quaderförmigen Roboterkopfes 184 ist eine Greifvorrichtung 188 angeordnet, welche einen relativ zu dem Roboterkopf 184 ortsfesten Greifer 190 (siehe Fig. 11) und zwei relativ zu dem Roboterkopf 184 mittels jeweils einer Verschiebungseinrichtung 192 verschiebbare bewegliche Greifer 194 umfasst.

Die Verschiebungseinrichtungen 192 können beispielsweise als (hydraulische oder pneumatische) Zwei-Wege-Zylinder oder auch als elektrisch betätigbare Spindelmutter-Spindel-Einrichtungen ausgebildet sein.

Der ortsfeste Greifer 190 und die beweglichen Greifer 194 der Greifvorrichtung 188 sind derart mit Ausnehmungen und/oder mit Vorsprüngen versehen, dass das Werkstück 114 bei geschlossener Greifvorrichtung 188 formschlüssig zwischen den Greifern 190, 192 gehalten ist.

Das mit der vorstehend beschriebenen Reinigungsanlage 100 durchgeführte Reinigungsverfahren wird im folgenden unter Bezugnahme auf die Fig. 9 bis 29 im einzelnen erläutert, wobei gleichzeitig auch die einzelnen Bestandteile der Behandlungsbereiche 142 der vier Reinigungsstationen 122 der Reinigungsanlage 100 beschrieben werden:

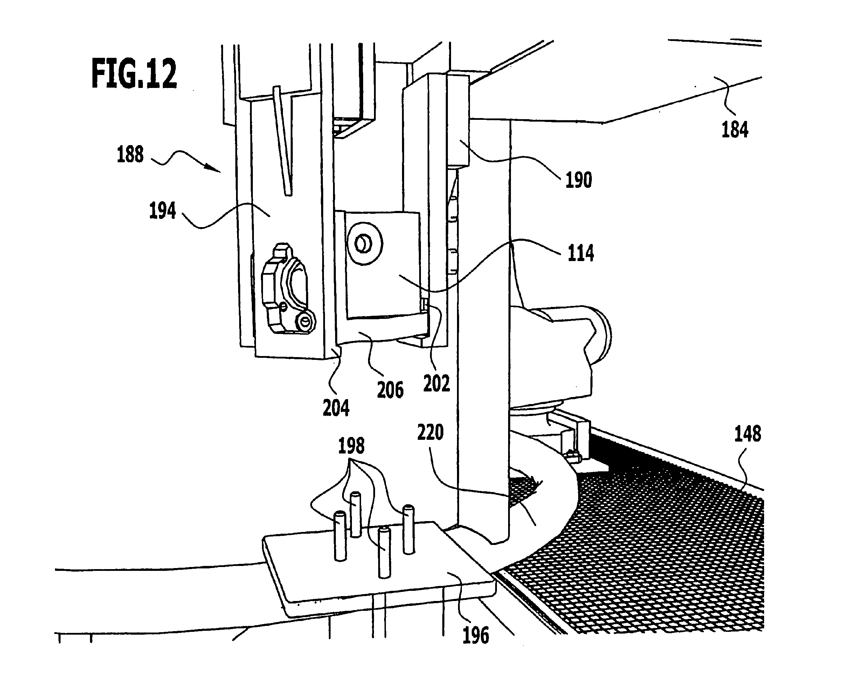

Nachdem das zu behandelnde Werkstück 114 durch die Beschickungsöffnung 112 in die Vorreinigungsstation 126 der Reinigungsanlage 100 eingebracht worden ist, befindet sich das Werkstück 114 zunächst auf einer Werkstückhalteplatte 196, von deren Oberseite sich vier Positionierstifte 198 nach oben erstrecken (siehe Fig. 12), welche in korrespondierende Ausnehmungen des Werkstücks 114 eintauchen, so dass das Werkstück 114 an der Werkstückhalteplatte 196 gegen eine Verschiebung in horizontaler Richtung gesichert ist.

Zur Aufnahme des Werkstücks 114 durch den ersten Roboter 152a werden die Dreh- und Schwenkantriebe des Roboters 152a von der automatischen Steuerung des Roboters so betätigt, dass die Greifvorrichtung 188 des Roboters 152a von der in Fig. 9 dargestellten Stellung über die in Fig. 10 dargestellte Stellung in die in Fig. 11 dargestellte Stellung bewegt wird, in welcher die Greifer 190, 194 der Greifvorrichtung 188 im wesentlichen vertikal ausgerichtet sind und das aufzunehmende Werkstück 114 von drei Seiten umgeben.

In der in Fig. 11 gezeigten Stellung wird das Werkstück 114 von der Haltevorrichtung 188 des Roboters 152a übernommen, indem der bezüglich des Roboterkopfes 184 ortsfeste Greifer 190 durch eine im wesentlichen horizontale Bewegung des Roboterkopfes 184 in radialer Richtung auf das Werkstück 114 zu bewegt wird, so dass ein Vorsprung 200 des Werkstücks 114 in eine Aufnahmeöffnung 202 an dem ortsfesten Greifer 190 eingreift, und indem die beiden beweglichen Greifer 194 durch die Verschiebungseinrichtung 192 längs der Verschiebungsrichtung 193 auf das Werkstück 114 zu bewegt werden, so dass sich am unteren Ende der beweglichen Greifer 194 befindliche Vorsprünge 204 unter eine Grundplatte 206 des Werkstücks 114 gelangen.

Durch die Verschiebung der beweglichen Greifer 194 wird die Greifvorrichtung 188 von der in Fig. 11 dargestellten Offenstellung in die in Fig. 12 dargestellte Schließstellung überführt, in welcher das Werkstück 114 formschlüssig an der Greifvorrichtung 188 gehalten ist.

Nach dem Schließen der Greifvorrichtung 188 wird das Werkstück 114 nach oben von der Werkstückhalteplatte 196 abgehoben und durch geeignete Steuerung der Dreh- und Schwenkantriebe des Roboters 152a von oben durch eine Zugangsöffnung 209 in einen nach oben offenen, im wesentlichen topfförmigen Vorreinigungsbehälter 208 der Vorreinigungsstation 126 eingebracht (siehe Fig. 12 bis 14).

Der Vorreinigungsbehälter 208 umfasst eine sich nach oben hin konisch erweiternde Seitenwand 210, an deren Innenseite mehrere Spritzdüsen 212 vorgesehen sind, welche in mehreren, beispielsweise drei, Spritzdüsengruppen 214 zusammengefasst sind.

Die Spritzdüsengruppe 214 umfasst mehrere, beispielsweise jeweils vier, Spritzdüsen 212, welche längs einer Mantellinie der Seitenwand 210 in vertikalem Abstand übereinander angeordnet sind.

Die Spritzdüsengruppen 214 selbst sind längs des Umfangs der Seitenwand 210 im wesentlichen äquidistant verteilt, also beispielsweise in einem Winkelabstand von jeweils 120°.

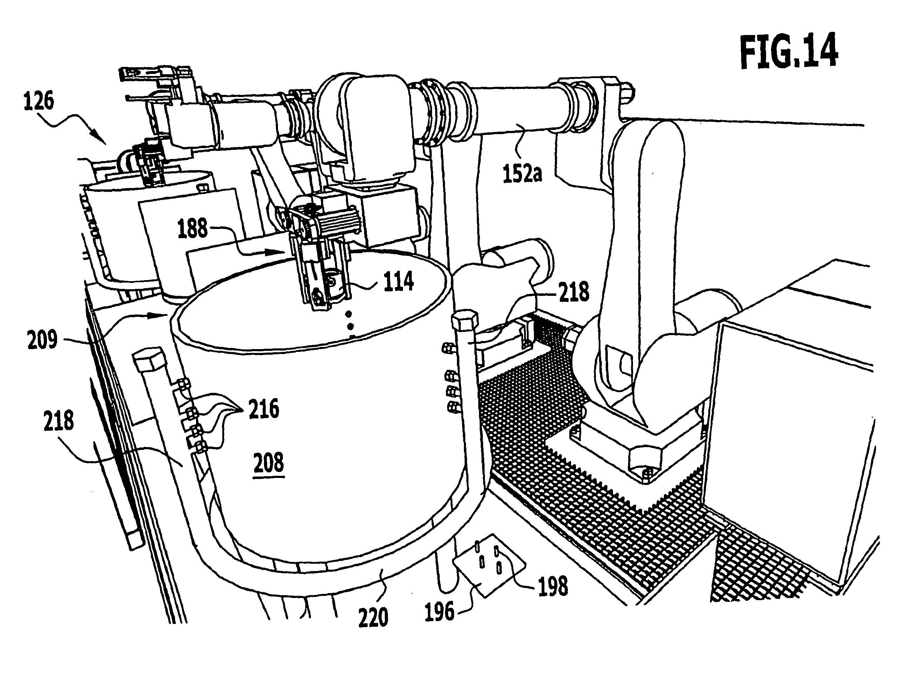

Wie am besten aus Fig. 14 zu ersehen ist, sind die Spritzdüsen 212 jeder Spritzdüsengruppe 214 über Zweigleitungen 216 mit jeweils einer Düsengruppenzuleitung 218 verbunden, welche ihrerseits an eine Ringleitung 220 angeschlossen ist.

Der Ringleitung 220 wird über eine (nicht dargestellte) Zuleitung ein flüssiges Vorreinigungsmittel unter Druck von einem im Wartungsbereich 136 der Vorreinigungsstation 126 angeordneten Tank mittels einer ebenfalls im Wartungsbereich 136 der Vorreinigungsstation 126 angeordneten Verdrängerpumpe zugeführt, sobald ein (nicht dargestelltes) Sperrventil in der Zuleitung zu der Ringleitung 220 geöffnet wird.

Die Öffnung dieses Sperrventils erfolgt, sobald das Werkstück 114 in den Innenraum 222 des Vorreinigungsbehälters 208 eingebracht worden ist, so dass jede Spritzdüse 212 einen Vorreinigungsmittelstrahl 224 erzeugt, welcher zu der vertikalen Mittelachse des Vorreinigungsbehälters 208 hin gerichtet ist.

Diese Flüssigkeitsstrahlen treffen auf das Werkstück 114 auf und lösen dort anhaftende Verunreinigungen.

Um eine gute Vorreinigungswirkung zu erzielen, wird das Werkstück 114 durch geeignete Betätigung der Dreh- und Schwenkantriebe des Roboters 152a im Wirkungsbereich der Vorreinigungsmittelstrahlen 224 so relativ zu den Vorreinigungsmittelstrahlen 224 bewegt, dass alle von außen zugänglichen Oberflächen des Werkstücks, auch die Oberflächen von Hohlräumen des Werkstücks 114, den Vorreinigungsmittelstrahlen 224 direkt ausgesetzt werden.

Das von dem Werkstück 114 ablaufende Vorreinigungsmittel sammelt sich am Boden des Vorreinigungsbehälters 208, von wo es durch einen (nicht dargestellten) Ablauf einer Filtrierung und Wiederverwendung zugeführt wird.

Nach Ende der vorgegebenen Vorreinigungszeit wird das Sperrventil in der Zuleitung zu der Ringleitung 220 geschlossen, so dass die Vorreinigungsmittelstrahlen 224 versiegen.

Nach einer gegebenenfalls sich anschließenden Abtropfphase wird das Werkstück 114 von dem Roboter 152a an die nächste Reinigungsstation 122, in diesem Fall die Hochdruck-Entgratungsstation 128, übergeben.

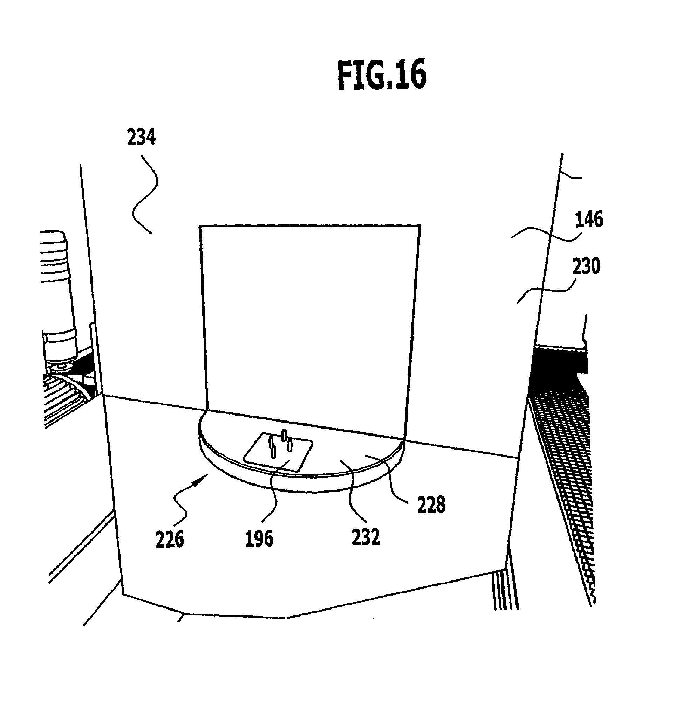

Dieser Übergabe dient das in den Fig. 16 bis 19 dargestellte, an der seitlichen Trennwand 146 zwischen der Vorreinigungsstation 126 und der Hochdruck-Entgratungsstation 128 angeordnete Drehschott 226.

Dieses Drehschott 226 umfasst einen im wesentlichen kreisscheibenförmigen Drehteller 228, der an seiner Oberseite eine vertikale Mittelwand 230 trägt, die sich in radialer Richtung des Drehtellers 228 über dessen ganzen Durchmesser hinweg erstreckt, so dass die Mittelwand 230 die Oberseite des Drehtellers 228 in zwei Werkstückaufnahmebereiche 232 trennt, von denen in den Fig. 16 bis 19 nur einer dargestellt ist.

In jedem Werkstückaufnahmebereich 232 des Drehtellers 228 ist jeweils eine Werkstückhalteplatte 196 der vorstehend bereits beschriebenen Art angeordnet.

In der in Fig. 16 dargestellten Ruhestellung der Werkstückschleuse 226 ist der in die Vorreinigungsstation 126 hineinragende Werkstückaufnahmebereich 232 leer, das heißt nicht mit einem Werkstück 114 belegt, und verschließt die Mittelwand 230 eine dem Drehschott 226 zugeordnete, im wesentlichen rechteckige Durchgangsöffnung in der seitlichen Trennwand 146.

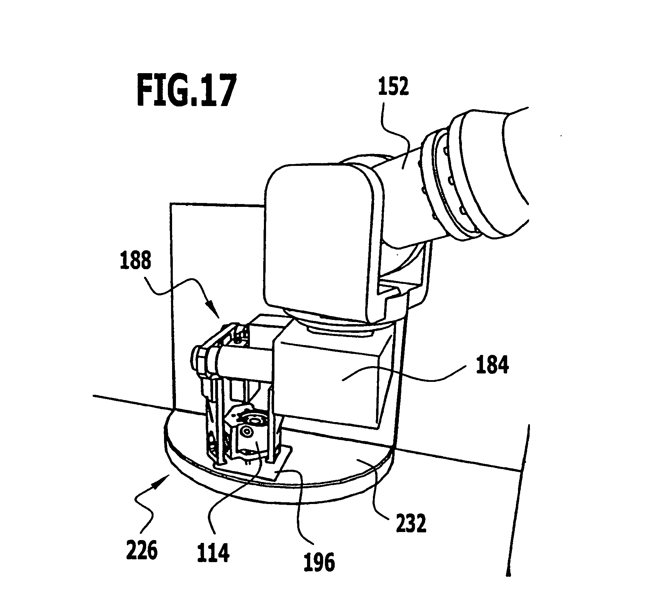

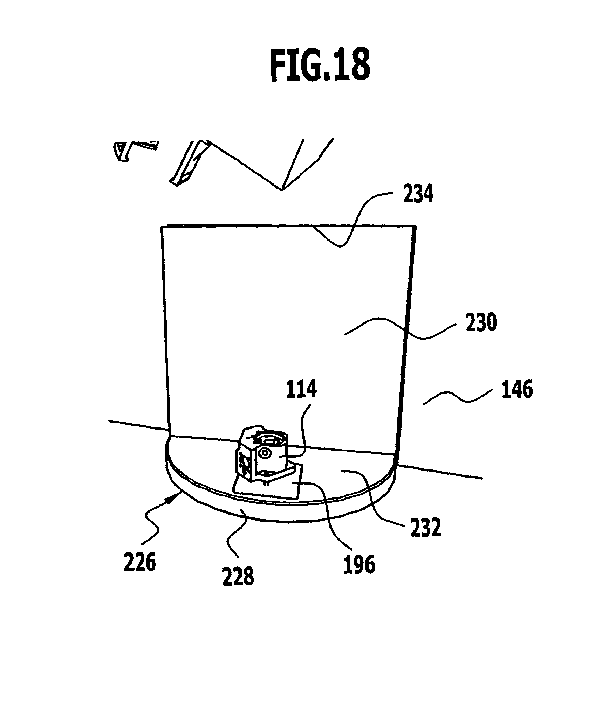

Nach Abschluss der Behandlung in der Vorreinigungsstation 126 wird das Werkstück 114 durch geeignete Betätigung der Dreh- und Schwenkantriebe des Roboters 152a auf der Werkstückhalteplatte 196 abgesetzt und durch Öffnen der Greifvorrichtung 188 freigegeben, wie in den Fig. 17 und 18 dargestellt.

Nach Fortbewegen der Greifvorrichtung 188 aus dem Werkstückaufnahmebereich 132 wird der Drehteller 228 mittels einer (nicht dargestellten) Drehantriebsvorrichtung um seine vertikale Mittelachse gedreht, so dass die Mittelwand 230 die Durchgangsöffnung 234 in der seitlichen Trennwand 146 freigibt und der Werkstückaufnahmebereich 132 mit dem Werkstück 114 durch die Durchgangsöffnung 234 in die nächstfolgende Reinigungsstation 122, hier die Hochdruck-Entgratungsstation 128, gelangt.

Zugleich gelangt durch die Drehung des Drehtellers 128 um einen Winkel von 180° der (nicht dargestellte) zweite Werkstückaufnahmebereich 232 des Drehtellers 228, welcher zu diesem Zeitpunkt leer ist, aus der Hochdruck-Entgratungsstation 128 in die Vorreinigungsstation 126, so dass das nächste zu behandelnde Werkstück 114 in diesem zweiten Werkstückaufnahmebereich 232 abgesetzt werden kann.

In der Hochdruck-Entgratungsstation 128 wird das Werkstück 114 von einem zweiten Roboter 152b in der vorstehend bereits beschriebenen Weise mittels der Greifvorrichtung 188 von der Werkstückhalteplatte 196 abgenommen und einer Hochdruck-Entgratungsbehandlung zugeführt.

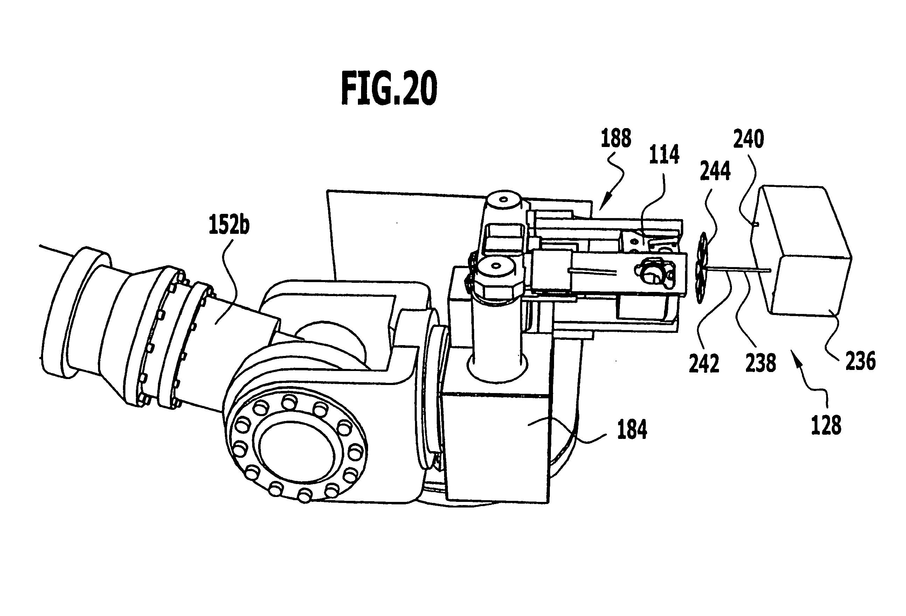

Zur Durchführung dieser Behandlung umfasst die Hochdruck-Entgratungsstation 128 eine in ihrem Behandlungsbereich 142 angeordnete Hochdruck-Entgratungseinheit 236 (siehe die Fig. 20 bis 22), welche eine erste Entgratungsspritzlanze 238 und eine zweite Entgratungsspritzlanze 240 aufweist.

Die erste Entgratungsspritzlanze 238 umfasst ein Spritzlanzenrohr 242, an dessen freiem Ende eine Vielzahl von in radialer Richtung weisenden Spritzöffnungen angeordnet sind, durch welche ein flüssiges Entgratungsmittel, beispielsweise Wasser, unter einem sehr hohen Druck von beispielsweise ungefähr 1000 bar, in einer Vielzahl radial zu dem Spritzlanzenrohr 242 gerichteter Entgratungsstrahlen 242 austritt.

Diese erste Entgratungsspritzlanze 238 dient dazu, die Oberflächen von Hohlräumen des Werkstücks 114 zu entgraten. Hierzu wird das Werkstück 114, durch geeignete Betätigung der Dreh- und Schwenkantriebe des Roboters 152b, so vor der Hochdruck-Entgratungseinheit 236 positioniert, dass es mit der Eintrittsöffnung eines Hohlraums zu der ersten Entgratungsspritzlanze 238 weist (siehe Fig. 20).

Anschließend wird die Haltevorrichtung 188 mit dem Werkstück 114 durch geeignete Betätigung der Dreh- und Schwenkantriebe des Roboters 152b so im wesentlichen in axialer Richtung der ersten Entgratungsspritzlanze 138 bewegt, dass das freie Ende des Spritzlanzenrohrs 242 in den betreffenden Hohlraum des Werkstücks 114 hineingelangt, so dass die Oberflächen des betreffenden Hohlraums des Werkstücks 114 von den radialen Entgratungsstrahlen 244 beaufschlagt und entgratet werden.

Wenn das Werkstück 114 mehrere zu entgratende Hohlräume aufweist, so kann diese Entgratungsbehandlung mittels der ersten Entgratungsspritzlanze 238 wiederholt werden, indem ein anderer Hohlraum des Werkstücks 114 angefahren wird.

Die zweite Entgratungsspritzlanze 240 der Hochdruck-Entgratungseinheit 236 erzeugt einen einzigen, in axialer Richtung der zweiten Entgratungsspritzlanze 240 senkrecht von einer Seitenwand der Hochdruck-Entgratungseinheit 236 weg gerichteten Entgratungsstrahl 246, welcher zur Entgratung von Außenflächen des Werkstücks 114 dient.

Um alle zu entgratenden Außenflächen des Werkstücks 114 mit dem Entgratungsstrahl 246 beaufschlagen zu können, wird das Werkstück 114 durch geeignete Betätigung der Dreh- und Schwenkantriebe des Roboters 152b im Wirkungsbereich des Entgratungsstrahl 246 so relativ zu dem Entgratungsstrahl 246 bewegt, dass alle zu entgratenden Außenflächen des Werkstücks 114 mit dem Entgratungsstrahl 246 beaufschlagt werden.

Die Entgratungsspritzlanzen 238, 240 der Hochdruck-Entgratungseinheit 236 sind über eine (nicht dargestellte) Entgratungsmittelzuleitung, die mit einem steuerbaren Sperrventil versehen ist, und eine Hochdruck-Pumpe mit einem Entgratungsmitteltank verbunden, welcher im Wartungsbereich 136 der Hochdruck-Entgratungsstation 128 angeordnet ist.

Nach Abschluss der Hochdruck-Entgratungsbehandlung wird das Werkstück 114 vom Roboter 152b in der vorstehend bereits beschriebenen Weise an ein Drehschott 226 übergeben, welches das Werkstück 114 von der Hochdruck-Entgratungsstation 128 in die sich daran anschließende Injektionsflutwaschstation 130 überführt.

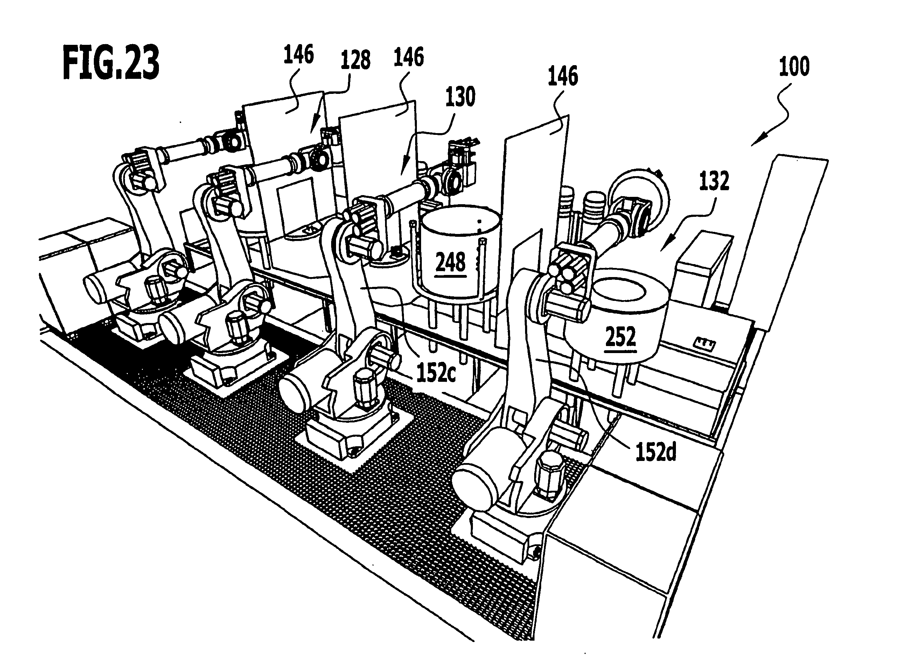

Die in den Fig. 23 bis 26 dargestellte Injektionsflutwaschstation 130 umfasst einen Injektionsflutwaschbehälter 248, der ähnlich wie der Vorreinigungsbehälter 208 aufgebaut ist und insbesondere an der Innenseite seiner Seitenwand 210 mit Spritzdüsen 212 zum Erzeugen von Flüssigkeitsstrahlen, in diesem Falle Injektionsflutwaschstrahlen 250, versehen ist.

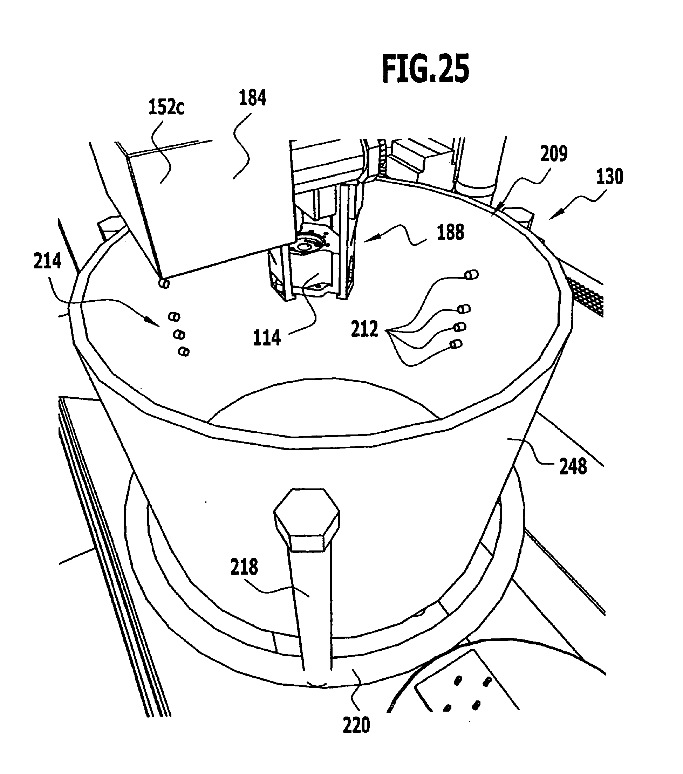

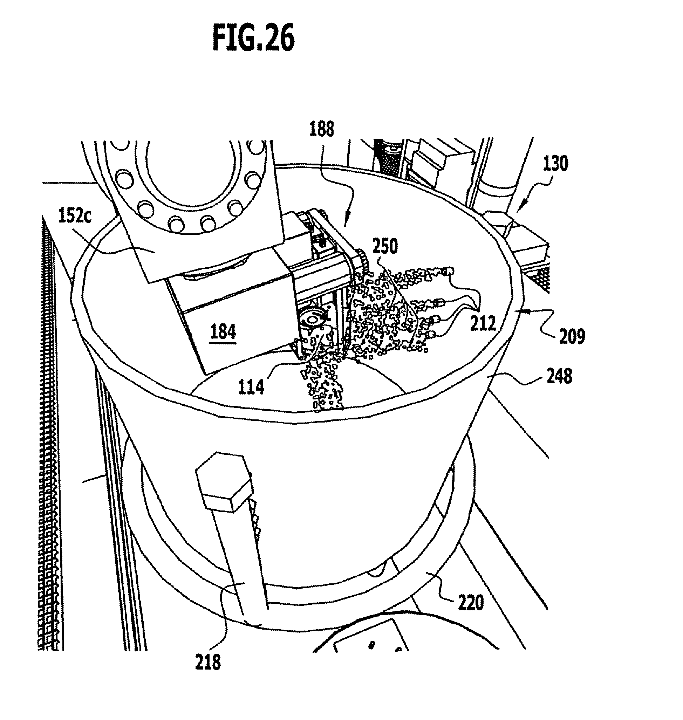

Das Werkstück 114 wird in der vorstehend bereits beschriebenen Weise von dem dritten Roboter 152c, welcher der Injektionsflutwaschstation 130 zugeordnet ist, von dem Drehschott 226 übernommen und von oben durch die Zugangsöffnung 209 in den nach oben offenen Injektionsflutwaschbehälter 248 eingebracht (siehe die Fig. 25 und 26).

Im Unterschied zur Vorreinigungsstation 126 ist der Injektionsflutwaschbehälter 248 der Injektionsflutwaschstation 130 jedoch bis zu einem oberhalb der Spritzdüsen 212 liegenden Pegel mit einem flüssigen Reinigungsmittel gefüllt, so dass das Werkstück 114 vollständig in dieses Reinigungsmittelbad eingetaucht und innerhalb des Reinigungsmittelbades von den Injektionsflutwaschstrahlen 250 beaufschlagt wird.

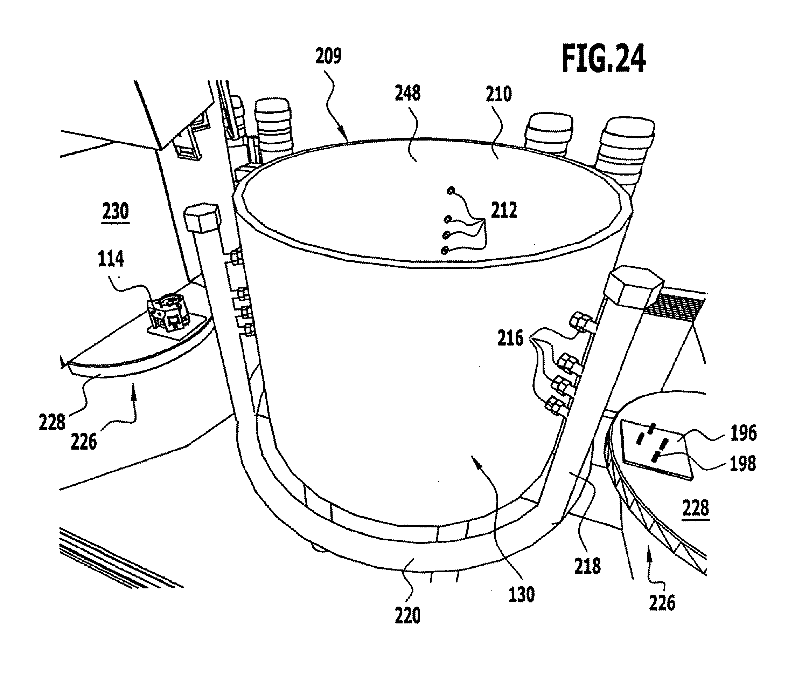

Aus Gründen der Übersichtlichkeit ist das den Injektionsflutwaschbehälter 248 füllende Reinigungsmittelbad in den Fig. 24 bis 26 nicht dargestellt.

Wie im Falle der Vorreinigungsstation 126 wird das Werkstück 114 durch geeignete Betätigung der Dreh- und Schwenkantriebe des Roboters 152c im Wirkungsbereich der Injektionsflutwaschstrahlen 250 relativ zu den Injektionsflutwaschstrahlen so bewegt, dass alle von außen erreichbaren Oberflächen des Werkstücks 114 mit den Injektionsflutwaschstrahlen 250 beaufschlagt werden.

Die Spritzdüsen 212 des Injektionsflutwaschbehälters 248 sind über Düsengruppenzuleitungen 218 und eine Ringleitung 220 sowie eine (nicht dargestellte) Zuleitung mit einem steuerbaren Sperrventil an eine im Wartungsbereich 136 der Injektionsflutwaschstation 130 angeordnete Verdrängerpumpe und einen Reinigungsmitteltank angeschlossen.

Aus dem Injektionsflutwaschbehälter 248 durch einen (nicht dargestellten) Abfluss ablaufendes Reinigungsmittel wird einer Filtrierung und Wiederverwendung zugeführt.

Nach Abschluss der Injektionsflutwaschbehandlung in der Injektionsflutwaschstation 130 wird das Werkstück 114 vom Roboter 152c in der vorstehend bereits beschriebenen Weise an ein Drehschott 226 übergeben, welches das Werkstück 114 von der Injektionsflutwaschstation 130 in die darauf folgende Vakuumtrocknungsstation 132 befördert.

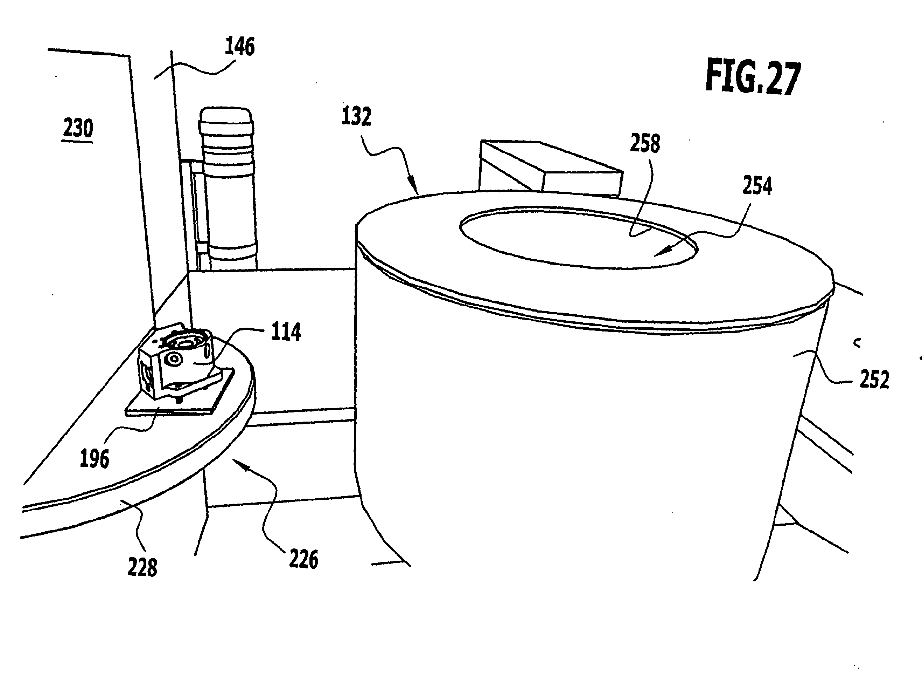

Die in den Fig. 27 bis 29 dargestellte Vakuumtrocknungsstation 132 umfasst einen Vakuumtrocknungsbehälter 252, welcher im wesentlichen topfförmig und nach oben offen ausgebildet ist.

Das Werkstück 114 wird von dem der Vakuumtrocknungsstation 132 zugeordneten vierten Roboter 152d aus der Werkstückschleuse 226 übernommen und von oben durch die Eintrittsöffnung 258 in den Innenraum 254 des Vakuumtrocknungsbehälters 252 eingebracht.

Der der Vakuumtrocknungsstation 132 zugeordnete Roboter 152d unterscheidet sich von den den übrigen Reinigungsstationen 122 zugeordneten Robotern dadurch, dass er zusätzlich mit einem Verschlussdeckel 256 für die Eintrittsöffnung 258 des Vakuumtrocknungsbehälters 252 versehen ist.

Dieser Verschlussdeckel 256 ist an der der Greifvorrichtung 188 abgewandten Seite des Roboterkopfes 184 angeordnet und längs seines unteren Randes mit einer umlaufenden Dichtung 260 versehen.

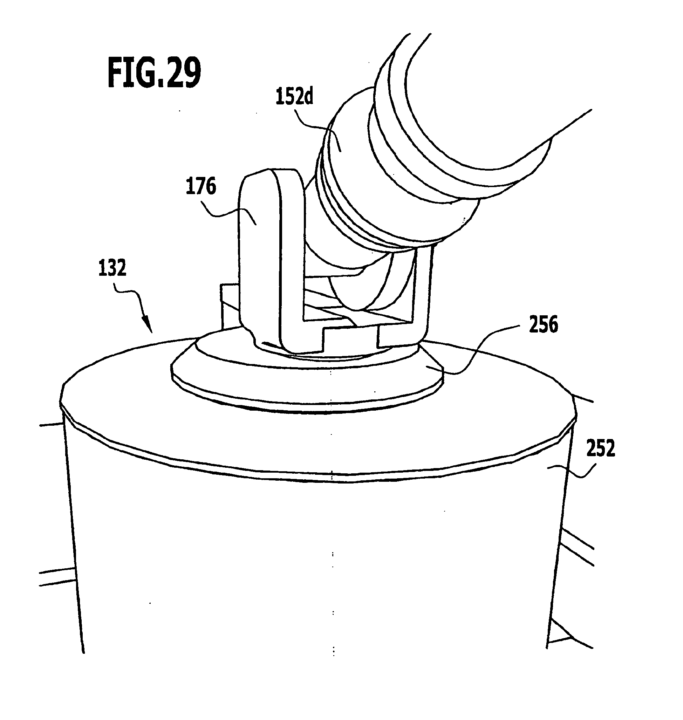

Der Durchmesser des Innenraums 254 des Vakuumtrocknungsbehälters 252 ist so bemessen, dass der Roboterkopf 184 mit der Greifvorrichtung 188 und dem daran angeordneten Werkstück 114 vollständig in den Innenraum 254 des Vakuumtrocknungsbehälters 252 eingeführt werden kann, bis der Verschlussdeckel 156 in der in Fig. 29 dargestellten Stellung an der Oberseite des Vakuumtrocknungsbehälters 252 anliegt und die Eintrittsöffnung 258 des Vakuumtrocknungsbehälters 252 im wesentlich gasdicht verschließt.

Nun wird der Innenraum 254 des Vakuumtrocknungsbehälters 252 über eine (nicht dargestellte) Vakuumleitung, die zu einer im Wartungsbereich 136 der Vakuumtrocknungsstation 132 angeordneten Vakuumpumpe führt, evakuiert, um das Werkstück 114 einer Vakuumtrocknungsbehandlung zu unterziehen.

Nach Abschluss der vorgegebenen Vakuumtrocknungsdauer wird der Innenraum 254 des Vakuumtrocknungsbehälters 252 wieder belüftet, und das Werkstück 114 wird in der vorstehend bereits beschriebenen Weise vom Roboter 152d auf einer Werkstückhalteplatte 196 abgesetzt, von wo das Werkstück 114 durch die Entnahmeöffnung 118 aus der Reinigungsanlage 100 entnommen werden kann.

Damit ist die Reinigung (einschließlich des abschließenden Trocknungsvorgangs) des Werkstücks 114 in der Reinigungsanlage 100 abgeschlossen.

## Patentansprüche

1. Reinigungsanlage zum Reinigen von Werkstücken, umfassend mindestens eine Reinigungsstation (122), in welcher die Werkstücke (114) einem Reinigungsvorgang unterzogen werden, und mindestens eine Handhabungsvorrichtung (152), welche ein Werkstück (114) vor einer Behandlung in einem Behandlungsbereich (142) der Reinigungsstation (122) übernimmt, das Werkstück (114) der Behandlung in dem Behandlungsbereich (142) der Reinigungsstation (122) zuführt und das Werkstück (114) nach der Behandlung in dem Behandlungsbereich (142) der Reinigungsstation (122) übergibt,
wobei die Handhabungsvorrichtung (152) mindestens drei Bewegungsfreiheitsgrade aufweist,
**dadurch gekennzeichnet,**
**dass** die Reinigungsanlage (100) eine Entgratungsstation umfasst, welche mindestens eine Spritzlanze (238) umfasst, wobei das Werkstück (114) mittels der Handhabungsvorrichtung (152) im Behandlungsbereich (142) der Entgratungsstation so bewegt wird, dass eine Spritzöffnung der Spritzlanze (238) während des Spritzvorgangs in einen Hohlraum des Werkstücks (114) eintritt.

2. Reinigungsanlage nach Anspruch 1, **dadurch gekennzeichnet, dass** der Bewegungsablauf der Handhabungsvorrichtung (152) in Abhängigkeit von dem Typ des jeweils gehandhabten Werkstücks (114) werkstücktypspezifisch steuerbar ist.

3. Reinigungsanlage nach einem der Ansprüche 1 oder 2, **dadurch gekennzeichnet, dass** die Handhabungsvorrichtung (152) mindestens vier vorzugsweise mindestens sechs, Bewegungsfreiheitsgrade aufweist.

4. Reinigungsanlage nach einem der Ansprüche 1 bis 3, **dadurch gekennzeichnet, dass** die Handhabungsvorrichtung (152) eine Greifvorrichtung (188) zum Ergreifen des Werkstücks (114) umfasst.

5. Reinigungsanlage nach einem der Ansprüche 1 bis 4, **dadurch gekennzeichnet, dass** die Handhabungsvorrichtung (152) als ein Roboter ausgebildet ist.

6. Reinigungsanlage nach einem der Ansprüche 1 bis 5, **dadurch gekennzeichnet, dass** die Handhabungsvorrichtung (152) an einer Reinigungsstation (122) stationär angeordnet ist.

7. Reinigungsanlage nach einem der Ansprüche 1 bis 6, **dadurch gekennzeichnet, dass** die Reinigungsanlage (100) mindestens eine Waschstation (126, 130) umfasst, welche einen Waschbehälter (208, 248) umfasst, in welchem sich das Werkstück (114) während eines Waschvorgangs befindet, wobei der Waschbehälter (208, 248) eine Zugangsöffnung (209) aufweist, durch welche sich die Handhabungsvorrichtung (152) während des Waschvorgangs in den Waschbehälter (208, 248) hinein erstreckt, und wobei die Zugangsöffnung (209) an der Oberseite des Waschbehälters (208, 248) angeordnet ist.

8. Reinigungsanlage nach Anspruch 7, **dadurch gekennzeichnet, dass** der Waschbehälter (208, 248) an einer Innenseite mit Spritzdüsen (212) versehen ist, welche insbesondere zu mehreren Spritzdüsengruppen (214) zusammengefasst sind.

9. Reinigungsanlage nach Anspruch 8, **dadurch gekennzeichnet, dass** der Waschbehälter (248) bis zu einem oberhalb der Spritzdüsen (212) liegenden Pegel mit einem flüssigen Reinigungsmittel gefüllt ist.

10. Reinigungsanlage nach einem der Ansprüche 1 bis 9, **dadurch gekennzeichnet, dass** die Reinigungsanlage (100) mindestens eine Vakuumstation umfasst, welche einen Vakuumbehälter (252) umfasst, in welchem sich das Werkstück (114) während eines Arbeitsvorgangs unter Vakuum befindet, wobei der Vakuumbehälter (252) eine Eintrittsöffnung (258) aufweist, welche während des Arbeitsvorgangs mittels eines an der Handhabungsvorrichtung (152c) angeordneten Deckels (256) im Wesentlichen gasdicht verschlossen wird.

11. Reinigungsanlage nach einem der Ansprüche 1 bis 10, **dadurch gekennzeichnet, dass** das Werkstück während der Behandlung in dem Behandlungsbereich (142) der Reinigungsstation (122) an der Handhabungsvorrichtung (152) gehalten ist.

12. Reinigungsanlage nach Anspruch 11, **dadurch gekennzeichnet, dass** das Werkstück während der Behandlung in dem Behandlungsbereich (142) der Reinigungsstation (122) mittels der Handhabungsvorrichtung (152) relativ zu einer Behandlungsvorrichtung (212, 236) der Reinigungsstation (122) bewegbar ist.

13. Reinigungsanlage nach Anspruch 12, **dadurch gekennzeichnet, dass** das Werkstück mittels der Handhabungsvorrichtung (152) relativ zu Reinigungsmittelstrahlen (224) bewegbar ist.

14. Reinigungsanlage nach einem der Ansprüche 1 bis 13, **dadurch gekennzeichnet, dass** die Reinigungsanlage (100) eine Werkstückhalteplatte (196) umfasst, an der das Werkstück (114) gegen eine Verschiebung, insbesondere in horizontaler Richtung, gesichert ist.

15. Reinigungsanlage nach einem der Ansprüche 1 bis 14, **dadurch gekennzeichnet, dass** die Spritzlanze (238) ein Spritzlanzenrohr (242) umfasst, an dessen Ende eine Vielzahl von in radialer Richtung weisenden Spritzöffnungen angeordnet sind.

## Claims

1. A cleaning plant for cleaning workpieces comprising at least one cleaning station (122) in which the workpieces (114) are subjected to a cleaning process, and at least one manipulating device (152) which picks up a workpiece (114) prior to treatment in a treatment area (142) of the cleaning station (122), supplies the workpiece (114) to the treatment process in the treatment area (142) of the cleaning station (122) and passes on the workpiece (114) after the treatment in the treatment area (142) of the cleaning station (122),
wherein the manipulating device (152) has at least three degrees of freedom of movement,
**characterised in that**
the cleaning plant (100) comprises a deburring station, which comprises at least one spraying lance (238), wherein the workpiece (114) is moved within the treatment area (142) of the deburring station by means of the manipulating device (152) in such a way that a spraying opening of the spraying lance (238) enters a cavity of the workpiece (114) during the spraying process.

2. A cleaning plant in accordance with Claim 1, **characterised in that** the pattern of movement of the manipulating device (152) is controllable in a manner specific to the type of work piece in dependence on the type of workpiece (114) currently being handled.

3. A cleaning plant in accordance with either of Claims 1 or 2, **characterised in that** the manipulating device (152) exhibits at least three, preferably at least four, degrees of freedom of movement.

4. A cleaning plant in accordance with any of the Claims 1 to 3, **characterised in that** the manipulating device (152) comprises a gripping device (188) for seizing the workpiece (114).

5. A cleaning plant in accordance with any of the Claims 1 to 4, **characterised in that** the manipulating device (152) is in the form of a robot.

6. A cleaning plant in accordance with any of the Claims 1 to 5, **characterised in that** the manipulating device (152) is arranged in a static manner in a cleaning station (122).

7. A cleaning plant in accordance with any of the Claims 1 to 6, **characterised in that** the cleaning plant (100) comprises at least one washing station (126, 130) which comprises a washing vessel (208, 248) in which the workpiece (114) is located during a washing process, whereby the washing vessel (208, 248) incorporates an access opening (209) through which the manipulating device (152) extends into the washing vessel (208, 248) during the washing process, and wherein the access opening (209) is arranged at the top of the washing vessel (208, 248).

8. A cleaning plant in accordance with claim 7, **characterised in that** the washing vessel (208, 248) is provided on an inner surface with spray nozzles (212), which in particular are formed into a plurality of spray nozzle groups (214).

9. A cleaning plant in accordance with claim 8, **characterised in that** the washing vessel (248) is filled with a fluid cleaning agent up to a level lying above the spray nozzles (212).

10. A cleaning plant in accordance with any of the Claims 1 to 9, **characterised in that** the cleaning plant (100) comprises at least one vacuum station, which comprises a vacuum chamber (252) in which the workpiece (114) is located under vacuum during a working process, whereby the vacuum chamber (252) incorporates an inlet opening (258) which is closed in a substantially gastight manner during the working process by means of a cover (256) arranged on the manipulating device (152c).

11. A cleaning plant in accordance with any of the Claims 1 to 10, **characterised in that** the workpiece is held on the manipulating device (152) during the treatment in the treatment area (142) of the cleaning station (122).

12. A cleaning plant in accordance with Claim 11, **characterised in that** the workpiece is movable relative to a treatment device (212, 236) of the cleaning station (122) by means of the manipulating device (152) during the treatment in the treatment area (142) of the cleaning station (122).

13. A cleaning plant in accordance with claim 12, **characterised in that** the workpiece is movable relative to jets (224) of cleaning Agent by means of the manipulating device (152).

14. A cleaning plant in accordance with any of the claims 1 to 13, **characterised in that** the cleaning plant (100) comprises a workpiece retaining plate (196), on which the workpiece is secured against a displacement, particularly in a horizontal direction.

15. A cleaning plant in accordance with any of claims 1 to 14, **characterised in that** the spraying lance (238) comprises a spraying lance pipe (242), on the end of which the are arranged a multiplicity of spray, openings oriented in a radial direction.

## Revendications

1. Installation de nettoyage pour le nettoyage de pièces, comprenant au moins une station de nettoyage (122), dans laquelle les pièces (114) sont soumises à une opération de nettoyage, et au moins un dispositif de manipulation (152), qui reprend une pièce (114) avant un traitement dans une zone de traitement (142) de la station de nettoyage (122), envoie la pièce (114) au traitement dans la zone de traitement (142) de la station de nettoyage (122) et transmet la pièce (114) après le traitement dans la zone de traitement (142) de la station de nettoyage (122), dans laquelle le dispositif de manipulation (152) présente au moins trois degrés de liberté de mouvement, **caractérisée en ce que** l'installation de nettoyage (100) comprend une station d'ébavurage, qui comprend au moins une lance de projection (238), dans laquelle la pièce (114) est déplacée au moyen du dispositif de manipulation (152) dans la zone de traitement (142) de la station d'ébavurage de telle manière qu'un orifice de projection de la lance de projection (238) pénètre dans une cavité de la pièce (114) pendant l'opération de projection.

2. Installation de nettoyage selon la revendi-cation 1, **caractérisée en ce que** le déroulement du mouvement du dispositif de manipulation (152) peut être commandé de façon spécifique à la pièce en fonction du type de la pièce respec-tivement manipulée (114).

3. Installation de nettoyage selon l'une quel-conque des revendications 1 ou 2, **caractérisée en ce que** le dispositif de manipulation (152) présente au moins quatre, de préférence au moins six, degrés de liberté de mouvement.

4. Installation de nettoyage selon l'une quel-conque des revendications 1 à 3, **caractérisée en ce que** le dispositif de manipulation (152) comprend un dispositif de saisie (188) pour saisir la pièce (114).

5. Installation de nettoyage selon l'une quel-conque des revendications 1 à 4, **caractérisée en ce que** le dispositif de manipulation (152) est réalisé sous la forme d'un robot.

6. Installation de nettoyage selon l'une quel-conque des revendications 1 à 5, **caractérisée en ce que** le dispositif de manipulation (152) est disposé de façon stationnaire sur une station de nettoyage (122).

7. Installation de nettoyage selon l'une quel-conque des revendications 1 à 6, **caractérisée en ce que** l'installation de nettoyage (100) comprend au moins une station de lavage (126, 130), qui comporte un réservoir de lavage (208, 248) dans lequel la pièce (114) se trouve pendant une opération de lavage, dans laquelle le réservoir de lavage (208, 248) présente une ouverture d'accès (209) à travers laquelle le dispositif de manipulation (152) s'étend à l'in-térieur du réservoir de lavage (208, 248) pendant l'opération de lavage, et dans laquelle l'ouver-ture d'accès (209) est disposée sur le côté supérieur du réservoir de lavage (208, 248).

8. Installation de nettoyage selon la revendica-tion 7, **caractérisée en ce que** le réservoir de lavage (208, 248) est muni sur un côté intérieur de buses de projection (212), qui sont notamment rassemblées en plusieurs groupes de buses de projection (214).

9. Installation de nettoyage selon la revendica-tion 8, **caractérisée en ce que** le réservoir de lavage (248) est rempli d'un agent de nettoyage liquide jusqu'à un niveau situé au-dessus des buses de projection (212).

10. Installation de nettoyage selon l'une quel-conque des revendications 1 à 9, **caractérisée en ce que** l'installation de nettoyage (100) com-prend au moins une station sous vide, qui comporte un réservoir sous vide (252) dans lequel la pièce (114) se trouve pendant une opération de travail sous vide, dans laquelle le réservoir sous vide (252) présente une ouverture d'entrée (258), qui est fermée de façon essentiellement étanche au gaz pendant l'opération de travail sous vide au moyen d'un couvercle (256) disposé sur le dispositif de manipulation (152c).

11. Installation de nettoyage selon l'une quel-conque des revendications 1 à 10, **caractérisée en ce que** la pièce est maintenue sur le dispositif de manipulation (152) pendant le traitement dans la zone de traitement (142) de la station de nettoyage (122).

12. Installation de nettoyage selon la revendi-cation 11, **caractérisée en ce que** la pièce peut être déplacée par rapport à un dispositif de traitement (212, 236) de la station de nettoyage (122) au moyen du dispositif de manipulation (152) pendant le traitement dans la zone de trai-tement (142) de la station de nettoyage (122).

13. Installation de nettoyage selon la revendi-cation 12, **caractérisée en ce que** la pièce peut être déplacée par rapport à des jets d'agent de nettoyage (224) au moyen du dispositif de manipulation (152).

14. Installation de nettoyage selon l'une quel-conque des revendications 1 à 13, **caractérisée en ce que** l'installation de nettoyage (100) com-prend une plaque porte-pièce (196), sur laquelle la pièce (114) est fixée contre un déplacement, en particulier en direction horizontale.

15. Installation de nettoyage selon l'une quel-conque des revendications 1 à 14, **caractérisée en ce que** la lance de projection (238) comprend un tube de lance de projection (242), à l'extrémité duquel sont disposés une pluralité d'orifices de projection orientés en direction radiale.
